# EUROPÄISCHE PATENTSCHRIFT

(11) **EP 1 756 204 B1**
(45) Veröffentlichungstag und Bekanntmachung des Hinweises auf die Patenterteilung: **27.12.2017**
(21) Anmeldenummer: 05748242.4
(22) Anmeldetag: 20.04.2005
(51) Int. Cl.: B01J 20/26, C08F 6/00

(54) **VERFAHREN ZUR HERSTELLUNG EINES ABSORBIERENDEN POLYMERS MITTELS SPREITTROCKNUNG**
METHOD FOR THE PRODUCTION OF AN ABSORBENT POLYMER BY MEANS OF SPREAD-DRYING
PROCEDE DE PRODUCTION D'UN POLYMERE ABSORBANT PAR SECHAGE AVEC ETALEMENT

(30) Priorität: 21.04.2004 DE 102004019264
(43) Veröffentlichungstag der Anmeldung: 28.02.2007
(73) Patentinhaber: Evonik Degussa GmbH, 45128 Essen (DE)
(72) Erfinder: BECKER, Volker, 46537 Dinslaken (DE); GRUPE, Heinz-Peter, 47803 Krefeld (DE); JUNG, Detlef, 47918 Tönisvorst (DE); REIMANN, Armin, 47877 Willich (DE)
(74) Vertreter: Lang, Arne
(86) Internationale Anmeldenummer: PCT/EP2005/004228
(87) Internationale Veröffentlichungsnummer: WO 2005/103119

(56) Entgegenhaltungen:
- EP-A- 0 380 931
- EP-A- 0 926 162
- EP-A- 0 948 997
- EP-A- 1 367 081
- EP-A- 1 440 986
- WO-A-95/27739
- WO-A-02/066543
- DE-B- 1 035 177
- US-A- 4 339 373
- PATENT ABSTRACTS OF JAPAN Bd. 1996, Nr. 07, 31. Juli 1996 (1996-07-31) & JP 08 073518 A (SANYO CHEM IND LTD), 19. März 1996 (1996-03-19)

## Beschreibung

Die Erfindung betrifft ein Verfahren zur Herstellung eines absorbierenden Polymers.

Für eine Bildung von sogenannten "absorbierenden" Polymeren ist eine Polymerisation verschiedener Arten von normalerweise wasserlöslichen Monomeren, oft auch zusammen mit wasserunlöslichen Comonomeren in Gegenwart von Vernetzern erforderlich. Die Zugabe der Vernetzer erfolgt während oder nach der Polymerisation. Derartig absorbierende Polymere sind schwachvernetzte, wasserunlösliche Hydrogelpolymere, die im trockenen und im wesentlichen wasserfreien Zustand eine große Fähigkeit zur Wasserabsorption aufweisen. Diese kann ein Mehrfaches ihres Eigengewichts ausmachen. Aufgrund der hohen Absorptionsfähigkeit eignen sich die absorbierenden Polymere zur Einarbeitung in wasserabsorbierende Strukturen und Gegenstände, wie z. B. Babywindeln, Inkontinenzprodukte oder Damenbinden. Diese absorbierenden Polymere werden in der Literatur auch als "Superabsorber" bezeichnet. In diesem Zusammenhang wird auf Modern Superabsorbent Polymer Technology; F.L. Buchholz, A.T. Graham, Wiley-VCH, 1998 verwiesen.

Die Herstellung derartiger Polymere erfolgt in Anwesenheit von Lösemitteln, vorzugsweise Wasser, so dass ein Trocknungsschritt zur Trocknung des erhaltenen Polymergels erforderlich ist. Die Art und Weise der Trocknung hat einen erheblichen Einfluss auf die mikroskopische Struktur und die physikalischen und chemischen Eigenschaften des hergestellten Polymers, so dass besondere Sorgfalt bei der Trocknung des Polymers geboten ist.

Der Trocknungsschritt stellt einen kostenintensiven Verfahrensschritt dar, da das Wasser gegen osmotische kapillare Kräfte und durch Dipol-Dipol-Wechselwirkungen und Wasserstoffbrückenbindungen bedingten Kräfte sowie Adhäsionskräfte aus dem Polymer entzogen werden muss. Üblicherweise wird ein zu trocknendes Polymer zu Gelgranulat zerkleinert, als Schicht auf ein perforiertes Band aufgetragen und mit Hilfe eines Luftstroms getrocknet.

Eine Steigerung der Effizienz bei der Trocknung bewirkt eine erhebliche Kostenersparnis. Anderseits darf die Effizienz bei der Trocknung nicht zu Lasten einer schonenden und gleichmäßigen Trocknung gehen. Bisher bekannte Trocknungsverfahren hatten oft den Nachteil, dass sie aufgrund von Dickenschwankungen der zu trocknenden Schicht aus Gelgranulat und/oder aufgrund Dichteschwankungen des Gelgranulats innerhalb der Schicht zu einer inhomogen Trocknung führten. Eine inhomogene Trocknung wirkt sich nachteilig auf die Produktqualität und die Saugeigenschaften des absorbierenden Polymers bzw. der dieses Polymer enthaltenen Weiterverarbeitungsprodukte - z.B. Hygieneartikel aller Art - aus. Außerdem führt eine inhomogene Trocknung des Gelgranulates dazu, dass nur unzureichend getrocknetes und somit viskoses Gelgranulat an den Oberflächen der der Trocknungsvorrichtung nachgeschalteten Pulverisierungsvorrichtung anhaften bleibt, was häufig zu einem Ausfall der Pulverisierungsvorrichtung führt.

Weiterhin führt eine unsachgemäße Trocknung zu einem Verbacken der Teilchen des zu trocknenden Polymers unter Ausbildung eines Kuchens. So resultieren aus Inhomogenitäten dieses Kuchens eine ungleichmäßige Trocknung und das Entstehen von sehr festen, schlecht durchlüftbaren Bereichen in diesem Kuchen. Diese Bereiche müssen unter erheblicher mechanischer Belastung des Polymers wieder aufgebrochen werden. Hiermit ist eine erhebliche unerwünschte Staubentwicklung verbunden.

Zur Lösung dieser Probleme schlägt JP 08/73518 vor, kontinuierlich die Dicke der Gelschicht auf einem Bandtrockner zu bestimmen und die Trocknungsbedingungen der Dicke der Gelschicht anzupassen. US 6,291,636 B1 schlägt vor, in einem vor dem Pulverisierungsschritt erfolgenden Abtrennschritt unzureichend getrocknetes Granulat abzutrennen.

Das in der US 6,291,636 B1 vorgeschlagene Abtrennen unzureichend getrockneten Granulates wird gemäß der Lehre der WO 03/051939 A1 dadurch vermieden, dass der in der zur Polymerisation eingesetzten Acrylsäure ein Mindestgehalt an Furfural zugesetzt wird. Dieses Verfahren ist jedoch nachteilig, da Furfural nicht nur als Polymerisations-Inhibitor wirkt, sondern auch toxisch ist, was insbesondere bei der Verwendung der Polymere in Hygieneartikeln bedenklich ist.

WO 02066543 A1 offenbart absorbierende Polymerteilchen, Verbundwerkstoffe enthaltend letztere sowie ein Verfahren zu ihrer Herstellung und die notwendigen Vorrichtungen.

In EP 0948997 A2 wird auf die Verwendung eines Desintegrators vor dem Trocknen hingewiesen.

In EP 0940148 A1 wird darauf hingewiesen, dass die Verteilung eines Gelgranulat auf einem Drahtnetz naturgemäß mechanisch erfolgt.

Die in EP 1440986 A1 offenbarten Polymere weisen absorbierende Eigenschaften auf, da diese in Gelform hergestellt werden.

Allgemein liegt der vorliegenden Erfindung die Aufgabe zu Grunde, die sich aus dem Stand der Technik ergebenden Nachteile zu überwinden.

Es ist insbesondere eine Aufgabe der vorliegenden Erfindung, ein Verfahren anzugeben, nach dem absorbierende Polymere hergestellt werden können, wobei eine besonders effiziente und gleichmäßige Trocknung des als Zwischenprodukt erhaltenen Gelmaterials bewirkt wird. Dieses Verfahren sollte mit möglichst wenigen Verfahrensschritten zu superabsorbierenden Polymeren mit gleichmäßiger Qualität und mit möglichst geringen toxikologischen Verunreinigungen führen.

Ebenso ist es Aufgabe der vorliegenden Erfindung, ein Verfahren anzugeben, nach dem absorbierende Polymere bzw. derartige Polymere enthaltende Verbunde hergestellt werden können, wobei die absorbierenden Polymere eine besonders gleichmäßige Qualität und ihrem Einsatz entsprechende physikalisch-chemische Eigenschaften, insbesondere Saugeigenschaften, aufweisen.

Eine weitere Aufgabe der Erfindung besteht darin, ein absorbierendes Polymer, Verbunde, die derartige absorbierende Polymere enthalten, und chemische Produkte, die derartige absorbierende Polymere enthalten, anzugeben, die besonders gleichmäßige physikalisch-chemische Eigenschaften und geringe toxikologische Verunreinigungen aufweisen.

Weiterhin ist es Aufgabe, eine Vorrichtung anzugeben, mit der absorbierende Polymere mit besonders gleichmäßigen physikalischen Eigenschaften kostengünstig hergestellt werden können.

Weiterhin ist es Ziel, die mechanische Belastung der dem Polymerisationsreaktor nachgeschalteten Weiterverarbeitungseinrichtungen zu reduzieren, um deren Ausfallwahrscheinlichkeit zu verringern und ihre Betriebsdauer zu verlängern.

Außerdem liegt eine erfindungsgemäße Aufgabe darin, ein superabsorbierendes Polymer bereit zu stellen, dass sich besonders gut in Hygieneartikel einarbeiten lässt, welches die Saugeigenschaften dieser Hygieneartikel vorteilhaft beeinflusst und welches durch eine geringe Belastung an toxikologischen Verunreinigungen gekennzeichnet ist.

Diese Aufgaben werden erfindungsgemäß gelöst durch das Verfahren zur Herstellung eines absorbierenden Polymers nach Anspruch 1. Vorteilhafte Ausgestaltungen und Weiterbildungen, die einzeln oder in Kombination auftreten können, sind Gegenstand der jeweils abhängigen Ansprüche.

Der Beginn des Schrittes iii) ist dabei derjenige Zeitpunkt im Verlaufe der Herstellung der absorbierenden Polymere, an dem das nach der Polymerisation erhaltene Polymergel nach dem Zerkleinern erstmals durch Zuführung von Energie in Form von Wärme oder in Form von Strahlung, beispielsweise IR-Strahlung, auf eine Temperatur von mindestens 60°C, vorzugsweise mindestens 100°C und besonders bevorzugt mindestens 150°C gebracht, vorzugsweise erhitzt wird, so dass eine kontinuierliche Verminderung des Wassergehaltes des Polymers und somit ein Trocknen desselben ermöglicht wird.

Das Spreitverhalten ist das Bestreben des Gelgranulats, Schichtdickenschwankungen aktiv auszugleichen. Hierbei wirken nicht nur Gravitationskräfte, sondern auch elastische Kräfte. Wird beispielsweise das Gelgranulat auf eine horizontale Fläche aufgetragen, verteilt sich das Gelgranulat auf dieser Fläche, wobei es die Tendenz zeigt, Täler und Hügel auszugleichen und eine Nivellierung des Gelgranulats zu bewirken. Die elastischen Kräfte treiben das Gelgranulat auseinander und die einzelnen Gelgranulatteilchen zeigen das Bestreben, sich mechanisch zu entspannen. Haben sich Gelgranulatteilchen mechanisch entspannt, verhalten sie sich wie bekannte Gelgranulatteilchen. Die elastischen Kräfte der Gelgranulatteilchen verleihen dem Gelgranulat einen lebendigen Charakter.

Die Trocknung wird durch das Spreitverhalten des Gelgranulats vereinfacht, da es zu einer gleichmäßigeren Schichtdicke führt. Wird z.B. ein derartiges Gelgranulat zur Trocknung aus einer Fallhöhe zwischen 20 und 80 cm, insbesondere bei einer Fallhöhe zwischen 30 und 50 cm, auf ein Trocknungsband (Bandtrockner) geschüttet, führt das Spreitverhalten des Gelgranulats vorteilhafterweise dazu, dass die Schwankungen der Schichtdicke des auf dem Trocknungsband befindlichen Gelgranulats (mittlere Schichtdicke auf dem Trocknungsband liegt zwischen 5 und 20 cm, insbesondere zwischen 10 und 15 cm) weniger als 30%, insbesondere weniger als 20%, vorzugsweise weniger als 10% betragen. Dabei bedeutet eine Schwankung von beispielsweise weniger als 10%, dass die Höhe des Geles an der Stelle mit der geringsten Dicke des Gels um weniger als 10% von der Höhe der Gels an der Stelle mit der größten Dicke des Geles abweicht. Durch diese Vergleichmäßigung der Schichtdicke kann das Gelgranulat besonders gleichmäßig getrocknet werden.

Gelgranulate eines absorbierenden Polymers, die nach der Polymerisation üblicherweise einen Wassergehalt zwischen 20 und 90 Gew.-%, vorzugsweise zwischen 40 und 70 Gew.-%, besonders bevorzugt zwischen 45 und 65 % und darüber hinaus bevorzugt zwischen 50 und 60 % aufweisen, können aufgrund des Nivellierungseffekts des Spreitens besonders effizient getrocknet werden. Das so getrocknete, absorbierende Polymer weist besonders gleichmäßige physikalisch-chemische Eigenschaften auf.

Auf das erfindungsgemäße Verfahrens trifft das folgende Merkmal zu:
a. das Polymergel wird nach dem Zerkleinern im Schritt ii) in Form des nach dem Zerkleinern erhaltenen Gelgranulates und noch vor dem vorstehend definierten Beginn des Trocknungsschrittes iii) mechanisch aufgelockert und ein aufgelockertes Gelgranulat wird erhalten, wobei das aufgelockerte Gelgranulat ein gemäß den hierin beschriebenen Testmethoden bestimmtes Spreitverhalten zeigt;

In einer Ausgestaltung des erfindungsgemäßen Verfahrens trifft das folgende Merkmale zu:
b. das Polymergel wird erst während des Trocknungsschrittes iii), vorzugsweise nachdem mindestens 5 Gew.-%, besonders bevorzugt mindestens 10 Gew.-%, darüber hinaus bevorzugt mindestens 20 Gew.-% und am meisten bevorzugt mindestens 30 Gew.-% des vor Beginn des Trocknungsschrittes iii) im Polymergel enthaltenen Wassers verdampft sind, mechanisch aufgelockert und ein aufgelockertes Gelgranulat wird erhalten, wobei das aufgelockerte Gelgranulat ein gemäß den hierin beschriebenen Testmethoden bestimmtes Spreitverhalten zeigt.

Das vorstehend beschriebene Auflockern des Gelgranulates in den Ausführungsformen a. und b. erfolgt jedoch vorzugsweise zu einem Zeitpunkt, zu dem die Gelpartikel noch die eingangs genannten Wassermengen und die eingangs genannte Temperatur aufweist.

Die Auflockerung des Gelgranulats erfolgt vor dem Trocknungsschritt iii). Das Spreitverhalten des Gelgranulats wird hier durch die mechanische Auflockerung hervorgerufen. Die Auflockerung führt zu einer verringerten und in entsprechender Anwendung der ERT 460.1-99 bestimmten Schüttdichte des ungetrockneten Gelgranulats von vorzugsweise weniger als 800 g/l, besonders bevorzugt weniger als 750 g/l, darüber hinaus bevorzugt weniger als 700 g/l, darüber hinaus noch mehr bevorzugt weniger als 650 g/l und am meisten bevorzugt weniger als 600 g/l. Weiterhin ist es bevorzugt, dass sich die Schüttdichte des ungetrockneten Granulates im Verlaufe der Auflockerung um mindestens 1%, besonders bevorzugt um mindestens 5%, darüber hinaus bevorzugt um mindestens 10%, darüber hinaus noch mehr bevorzugt um mindestens 20% und am meistens bevorzugt um mindestens 30% vermindert. In einer anderen Ausgestaltung des erfindungsgemäßen Verfahrens vermindert sich die Schüttdichte des ungetrockneten Gelgranulates durch das Auflockern um 10 bis 50% und darüber hinaus bevorzugt um 20 bis 30%. Dabei bedeutet eine Verminderung der Schüttdichte von beispielsweise 5 %, dass die Schüttdichte des ungetrockneten Granulates nach der Auflockerung um mindestens 5 % kleiner ist als die Schüttdichte vor dem Auflockern. In einer ganz besonderen Ausgestaltung des erfindungsgemäßen Verfahrens liegt die Verminderung der Schüttdichte in einem Bereich von 10 bis 50 %, noch mehr bevorzugt in einem Bereich von 20 bis 40%.

In der Ausgestaltung des erfindungsgemäßen Trocknungsverfahrens ist das Spreitverhalten des aufgelockerten Gelgranulats nach Schritt ii), vorzugsweise nach Schritt ii) und vor Beginn des Schrittes iii) zu einem Zeitpunkt, an dem das Gelgranulat noch die eingangs genannte Wassermenge und Temperatur aufweist, durch mindestens eines, vorzugsweise jedes, der folgenden Merkmale (δ1) bis (δ4) gekennzeichnet:
(δ1) ein erster Kompressibilitätsindex κ₁ des Gelgranulats liegt zwischen 15% und 30%, besonders bevorzugt zwischen 18% und 25%;
(δ2) ein zweiter Kompressibilitätsindex κ₂ des Gelgranulats liegt zwischen 3,5*10⁻⁵ Pa⁻¹ und 5*10⁻⁵ Pa⁻¹, besonders bevorzugt zwischen 3,9*10⁻⁵ Pa⁻¹ und 4,3*10⁻⁵ Pa⁻¹;
(δ3) ein erster Dekompressibilitätsindex κ₁' des Gelgranulats liegt zwischen 4% und 10%, besonders bevorzugt zwischen 5% und 8%;
(δ4) ein zweiter Dekompressibilitätsindex κ₂' des Gelgranulats liegt zwischen 4*10⁻⁵ Pa⁻¹ und 8*10⁻⁵ Pa⁻¹, besonders bevorzugt zwischen 5*10⁻⁵ Pa⁻¹ und 6,5*10⁻⁵ Pa⁻¹.

Jedes der vorstehenden Merkmale stellt weiterhin eine erfindungsgemäße Ausführungsform dar. Aus diesen stellen die nachfolgenden Ziffernkombinationen bevorzugte Ausführungsformen dar: δ1δ2δ3, δ1δ2δ4, δ1δ3δ4, δ1δ2, δ1δ3, δ1δ4, δ2δ3, δ2δ4, δ3δ4, δ1, δ2, δ3, δ4, δ1δ2δ3δ4, wobei δ1δ2δ3δ4 besonders bevorzugt ist.

Durch derartige Kompressibilitäts- bzw. Dekompressibillitätsindices wird das für die Trocknung des Gelgranulats vorteilhafte Spreitverhalten beschrieben.

In einer weiteren Ausgestaltung des erfindungsgemäßen Verfahrens zeigt das Gelgranulat nach Schritt ii), vorzugsweise nach Schritt ii) und vor Beginn des Schrittes iii) oder nach Schritt ii) und während des Schrittes iii) oder nach Schritt ii) und vor und während des Schrittes iii), vorzugsweise jedoch zu einem Zeitpunkt, an dem das Gelgranulat noch die eingangs genannte Wassermenge und Temperatur aufweist, mindestens eine der folgenden Eigenschaften:
(ε1) einen gemäß der hierin beschrieben Testmethode bei einer Belastung mit einer Gesamtmasse von 1.185 g bestimmten Querschnittsspreitindex Q von mindestens 3, insbesondere mindestens 5, vorzugsweise mindestens 7, besonders bevorzugt mindestens 7,5 und noch mehr bevorzugt mindestens 7,82, wobei der Querschnittsspreitindex Q vorzugsweise kleiner als 20 ist;
(ε2) einen gemäß der hierin beschrieben Testmethode bei einer Belastung mit einer Gesamtmasse von 2.175 g bestimmten Querschnittsspreitindex Q von mindestens 3, insbesondere mindestens 5, vorzugsweise mindestens 7, besonders bevorzugt mindestens 7,5 und noch mehr bevorzugt mindestens 7,56, wobei der Querschnittsspreitindex Q vorzugsweise kleiner als 20 ist;
(ε3) einen gemäß der hierin beschrieben Testmethode bei einer Belastung mit einer Gesamtmasse von 3.185 g bestimmten Querschnittsspreitindex Q von mindestens 3, insbesondere mindestens 5, vorzugsweise mindestens 6, besonders bevorzugt mindestens 7 und noch mehr bevorzugt mindestens 7,23, wobei der Querschnittsspreitindex Q vorzugsweise kleiner als 20 ist;
(ε4) einen gemäß der hierin beschrieben Testmethode bei einer Belastung mit einer Gesamtmasse von 6.185 g bestimmten Querschnittsspreitindex Q von mindestens 3, insbesondere mindestens 4, vorzugsweise mindestens 5, besonders bevorzugt mindestens 6 und noch mehr bevorzugt mindestens 6,57, wobei der Querschnittsspreitindex Q vorzugsweise kleiner als 20 ist.

Jedes der vorstehenden Merkmale stellt weiterhin eine erfindungsgemäße Ausführungsform dar. Aus diesen stellen die nachfolgenden Ziffernkombinationen bevorzugte Ausführungsformen dar: ε1ε2ε3, ε1ε2ε4, ε1ε3ε4, ε1ε2, ε1ε3, ε1ε4, ε2ε3, ε2ε4, ε3ε4, ε1, ε2, ε3, ε4, ε1ε2ε3ε4, wobei ε1ε2ε3ε4 besonders bevorzugt ist.

In einer bevorzugten Ausführung des erfindungemäßen Verfahrens zeigt das Gelgranulat nach Schritt ii), vorzugsweise nach Schritt ii) und vor Beginn des Schrittes iii) oder nach Schritt ii) und während des Schrittes iii) oder nach Schritt ii) und vor und während des Schrittes iii), vorzugsweise jedoch zu einem Zeitpunkt, an dem das Gelgranulat noch die eingangs genannte Wassermenge und Temperatur aufweist, eine gemäß der hierin beschriebenen Testmethode bei einer Belastung mit einer Gesamtmasse von 6.185 g bestimmte Spreitzeitkonstante τ von mindestens 2 s, vorzugsweise von mindestens 4 s, ferner bevorzugt von mindestens 6 s und besonders bevorzugt von mindestens 10 s. Weiterhin ist es bevorzugt, wenn die Spreitzeitkonstante τ einen Wert von 60 s nicht übersteigt.

Der erste κ₁ bzw. der zweite κ₂ Kompressibilitätsindex des Gelgranulats sowie der erste κ₁' bzw. der zweite κ₂' Dekompressibilitätsindex des Gelgranulats werden durch die unter Testmethoden beschriebenen Kompressions- und Dekompressionsversuche definiert. Die Bestimmung des Querschnittsspreitindex Q und der Spreitzeitkonstante τ ist ebenfalls den Testmethoden zu entnehmen.

Erfindungsgemäß wird das Gel im Verfahrensschritt ii) einer mindestens dreistufigen Zerkleinerung
- mit einer Schneideeinheit, vorzugsweise einem Messer, zum Schneiden des Gels in flächige Gelstreifen, bevorzugt mit einer Länge im Bereich von 5 bis 50, vorzugsweise von 8 bis 40 und besonders bevorzugt von 10 bis 30 mm, einer Höhe im Bereich von 1 bis 30, vorzugsweise von 5 bis 25 und besonders bevorzugt von 10 bis 20 mm sowie einer Breite im Bereich von 1 bis 40, vorzugsweise von 5 bis 30 und besonders bevorzugt von 10 bis 20 mm;
- einer Reißeinheit, vorzugsweise einem Brecher, zum Zerreißen der Gelstreifen in Gelstücke, bevorzugt mit einer Länge im Bereich von 2,5 bis 25, vorzugsweise von 1 bis 12,5 mm, einer Höhe im Bereich von 0,5 bis 15, vorzugsweise von 0,25 bis 7,5 mm sowie einer Breite im Bereich von 0,5 bis 20, vorzugsweise von 0,25. bis 10 mm und
- einer Wölfeinheit, vorzugsweise einem Wolf, bevorzugt aufweisend eine Schnecke und ein Lochplatte, wobei die Schnecke gegen die Lochplatte fördert, zum Wölfen und zerquetschen Gelstücke in Gelteile, die vorzugsweise kleiner als die Gelstücke sind,
unterworfen. Hiermit wird ein optimales Oberflächenvolumenverhältnis erzielt, welches sich vorteilhaft auf das Trocknungsverhalten auswirkt. Ein derartig zerkleinertes Gel eignet sich im Besonderen zur Bandtrocknung. Die dreistufige Zerkleinerung bietet eine bessere Belüftbarkeit aufgrund der zwischen den Granulatkörnern befindlichen Luftkanäle.

Es ist weiterhin bevorzugt, dass das in dem erfindungsgemäßen Verfahren nach dem Schritt ii) erhaltene Gelgranulat zu mindestens 10, vorzugsweise mindestens 20 und besonders bevorzugt mindestens 30 Gew.-%, jeweils bezogen auf das Gesamtgewicht des Gelgranulates, ein absorbierenden Polymer beinhaltet, das auf
(α1) 0,1 bis 99,999 Gew.-%, bevorzugt 20 bis 97,98 Gew.-% und besonders bevorzugt 60 bis 93,95 Gew.-% polymerisierten, ethylenisch ungesättigten, säuregruppenhaltigen Monomeren oder deren Salzen oder polymerisierten, ethylenisch ungesättigten, einen protonierten oder quarternierten Stickstoff beinhaltenden Monomeren, oder deren Mischungen, wobei mindestens ethylenisch ungesättigte, säuregruppenhaltige Monomere, vorzugsweise Acrylsäure, beinhaltende Mischungen besonders bevorzugt sind,
(α2) 0 bis 70 Gew.-%, bevorzugt 1 bis 60 Gew.-% und besonders bevorzugt 1 bis 40 Gew.-% polymerisierten, ethylenisch ungesättigten, mit (α1) copolymerisierbaren Monomeren,
(α3) 0,001 bis 10 Gew.-%, bevorzugt 0,01 bis 7 Gew.-% und besonders bevorzugt 0,05 bis 5 Gew.-% eines oder mehrerer Vernetzer,
(α4) 0 bis 30 Gew.-%, bevorzugt 1 bis 20 Gew.-% und besonders bevorzugt 5 bis 10 Gew.-% wasserlöslichen Polymeren, sowie
(α5) 0 bis 20 Gew.-%, bevorzugt 0,01 bis 7 Gew.-% und besonders bevorzugt 0,05 bis 5 Gew.-% eines oder mehrere Hilfsstoffe,
jeweils bezogen auf das trockene absorbierende Polymer, basiert, wobei die Summe der Gewichtsmengen (α1) bis (α5) 100 Gew.-% beträgt.

Das Gelgranulat beinhaltet üblicherweise Wasser in einer erheblichen Menge, da das absorbierende Polymer aus einer wässrigen Monomerlösung gewonnen wird, die vorzugsweise im Bereich von 90 bis 50, vorzugsweise im Bereich von 88 bis 55 und besonders bevorzugt im Bereich von 70 bis 60 Gew.-% Wasser, jeweils bezogen auf die gesamte wässrige Monomerlösung, aufweist.

Die monoethylenisch ungesättigten, säuregruppenhaltigen Monomere (α1) können teilweise oder vollständig, bevorzugt teilweise neutralisiert sein. Vorzugsweise sind die monoethylenisch ungesättigten, säuregruppenhaltigen Monomere zu mindestens 25 Mol-%, besonders bevorzugt zu mindestens 50 Mol-% und darüber hinaus bevorzugt zu 50-90 Mol-% neutralisiert. Die Neutralisation der Monomere (α1) kann vor auch nach der Polymerisation erfolgen. Ferner kann die Neutralisation mit Alkalimetallhydroxiden, Erdalkalimetallhydroxiden, Ammoniak sowie Carbonaten und Bicarbonaten erfolgen. Daneben ist jede weitere Base denkbar, die mit der Säure ein wasserlösliches Salz bildet. Auch eine Mischneutralisation mit verschiedenen Basen ist denkbar. Bevorzugt ist die Neutralisation mit Ammoniak oder mit Alkalimetallhydroxiden, besonders bevorzugt mit Natriumhydroxid oder mit Ammoniak.

Ferner können bei einem Polymer die freien Säuregruppen überwiegen, so dass dieses Polymer einen im sauren Bereich liegenden pH-Wert aufweist. Dieses saure wasserabsorbierende Polymer kann durch ein Polymer mit freien basischen Gruppen, vorzugsweise Amingruppen, das im Vergleich zu dem sauren Polymer basisch ist, mindestens teilweise neutralisiert werden. Diese Polymere werden in der Literatur als "Mixed-Bed Ion-Exchange Absorbent Polymers" (MBIEA-Polymere) bezeichnet und sind unter anderem in der WO 99/34843 offenbart In der Regel stellen MBIEA-Polymere eine Zusammensetzung dar, die zum einen basische Polymere, die in der Lage sind, Anionen auszutauschen, und andererseits ein im Vergleich zu dem basischen Polymer saures Polymer, das in der Lage ist, Kationen auszutauschen, beinhalten. Das basische Polymer weist basische Gruppen auf und wird typischerweise durch die Polymerisation von Monomeren erhalten, die basische Gruppen oder Gruppen tragen, die in basische Gruppen umgewandelt werden können. Bei diesen Monomeren handelt es sich vor allen Dingen um solche, die primäre, sekundäre oder tertiäre Amine oder die entsprechenden Phosphine oder mindestens zwei der vorstehenden funktionellen Gruppen aufweisen. Zu dieser Gruppe von Monomeren gehören insbesondere Ethylenamin, Allylamin, Diallylamin, 4-Aminobuten, Alkyloxycycline, Vinylformamid, 5-Aminopenten, Carbodiimid, Formaldacin, Melanin und dergleichen, sowie deren sekundäre oder tertiäre Aminderivate.

Die Offenbarungen der DE 102 23 060 A1 insbesondere hinsichtlich der Monomere (α1) und (α2), der Vernetzer (α3) sowie hinsichtlich der verwendeten Initiatoren und Initiatormengen werden hiermit erwähnt.

Bevorzugte monoethylenisch ungesättigte, säuregruppenhaltige Monomere (α1) sind diejenigen, die in der DE 102 23 060 A1 als bevorzugte Monomere (α1) genannt werden, wobei Acrylsäure besonders bevorzugt ist.

Es ist erfindungsgemäß bevorzugt, dass absorbierende Polymer, bezogen auf das Trockengewicht, zu mindestens 50 Gew.-%, vorzugsweise zu mindestens 70 Gew.-% und darüber hinaus bevorzugt zu mindestens 90 Gew.-% aus carboxylatgruppenhaltigen Monomeren besteht. Es ist erfindungsgemäß besonders bevorzugt, dass das absorbierende Polymer zu mindestens 50 Gew.-%, vorzugsweise zu mindestens 70 Gew.-% aus Acrylsäure besteht, die vorzugsweise zu mindestens 20 Mol-%, besonders bevorzugt zu mindestens 50 Mol-% neutralisiert ist.

Als monoethylenisch ungesättigte, mit (α1) copolymerisierbare Monomere (α2) sind diejenigen Monomere bevorzugt, die in der DE 102 23 060 A1 als bevorzugte Monomere (α2) genannt werden, wobei Acrylamid besonders bevorzugt ist.

Erfindungsgemäß bevorzugte Vernetzer (α3) sind Verbindungen, die mindestens zwei ethylenisch ungesättigte Gruppen innerhalb eines Moleküls aufweisen (Vernetzerklasse I), Verbindungen, die mindestens zwei funktionelle Gruppen aufweisen, die mit funktionellen Gruppen der Monomeren (α1) oder (α2) in einer Kondensationsreaktion (=Kondensationsvernetzer), in einer Additionsreaktion oder in einer Ringöffnungsreaktion reagieren können (Vernetzerklasse II), Verbindungen, die mindestens eine ethylenisch ungesättigte Gruppe und mindestens eine funktionelle Gruppe, die mit funktionellen Gruppen der Monomeren (α1) oder (α2) in einer Kondensationsreaktion, in einer Additionsreaktion oder in einer Ringöffnungsreaktion reagieren kann (Vernetzerklasse III), aufweisen, oder polyvalente Metallkationen (Vernetzerklasse IV). Dabei wird durch die Verbindungen der Vernetzerklasse I eine Vernetzung der Polymere durch die radikalische Polymerisation der ethylenisch ungesättigten Gruppen des Vernetzermoleküls mit den monoethylenisch ungesättigten Monomeren (α1) oder (α2) erreicht, während bei den Verbindungen der Vernetzerklasse II und den polyvalenten Metallkationen der Vernetzerklasse IV eine Vernetzung der Polymere durch Kondensationsreaktion der funktionellen Gruppen (Vernetzerklasse II) bzw. durch elektrostatische Wechselwirkung des polyvalenten Metallkations (Vernetzerklasse IV) mit den funktionellen Gruppen der Monomere (α1) oder (α2) erreicht wird. Bei den Verbindungen der Vernetzerklasse III erfolgt dementsprechend eine Vernetzung des Polymers sowohl durch radikalische Polymerisation der ethylenisch ungesättigten Gruppe als auch durch Kondensationsreaktion zwischen der funktionellen Gruppen des Vernetzers und den funktionellen Gruppen der Monomeren (α1) oder (α2).

Bevorzugte Vernetzer (α3) sind all diejenigen Verbindungen, die in der DE 102 23 060 A1 als Vernetzer (α3) der Vernetzerklassen I, II, III und IV genannt werden, wobei
- als Verbindungen der Vernetzerklasse I N,N'-Methylenbisacrylamid, Polyethylenglykoldi(meth)acrylate, Triallylmethylammoniumchlorid, Tetraallylammoniumchlorid sowie mit 9 Mol Ethylenoxid pro Mol Acrylsäure hergestelltes Allylpolyethylenglykolacrylat besonders bevorzugt sind, und
- und als Verbindungen der Vernetzerklasse IV Al₂(SO₄)₃ und seine Hydrate besonders bevorzugt sind.

Bevorzugte absorbierende Polymere sind Polymere, die durch Vernetzer der folgenden Vernetzerklassen bzw. durch Vernetzer der folgenden Kombinationen von Vernetzerklassen vernetzt sind: I, II, III, IV, I II, I III, I IV, I II III, I II IV, I III IV, II III IV, II IV oder III IV. Die vorstehenden Kombinationen von Vernetzerklassen stellen jeweils eine bevorzugte Ausführungsform von Vernetzern eines Polymers dar.

Weitere bevorzugte Ausführungsformen der absorbierenden Polymere sind Polymere, die durch einen beliebigen der in der DE 102 23 060 A1 offenbarten Vernetzer der Vernetzerklassen I vernetzt sind, wobei N,N'-Methylenbisacrylamid, Polyethylenglykoldi(meth)acrylate, Triallylmethylammoniumchlorid, Tetraallylammoniumchlorid sowie mit 9 Mol Ethylenoxid pro Mol Acrylsäure hergestelltes Allylpolyethylenglykolacrylat als Vernetzer der Vernetzerklasse I besonders bevorzugt sind

Aus den vorgenannten Monomeren und Vernetzern lassen sich die absorbierenden Polymere durch verschiedene, aus dem Stand der Technik bekannte Polymerisationsweisen herstellen. Beispielsweise sind in diesem Zusammenhang Massepolymerisation, die vorzugsweise in Knetreaktoren wie Extrudern oder durch Bandpolymerisation erfolgt, Lösungspolymerisation, Spraypolymerisation, inverse Emulsionspolymerisation und inverse Suspensionspolymerisation zu nennen. Erfindungsgemäß bevorzugt wird die Lösungspolymerisation in Wasser als Lösungsmittel durchgeführt. Die Lösungspolymerisation kann kontinuierlich oder diskontinuierlich erfolgen. Aus dem Stand der Technik ist ein breites Spektrum von Variationsmöglichkeiten hinsichtlich Reaktionsverhältnisse wie Temperaturen, Art und Menge der Initiatoren als auch der Reaktionslösung zu entnehmen. Typische Verfahren sind in den folgenden Patentschriften beschrieben: US 4,286,082, DE 27 06 135, US 4,076,663, DE 35 03 458, DE 40 20 780, DE 42 44 548, DE 43 23 001, DE 43 33 056, DE 44 18 818.

Die Polymerisation wird wie allgemein üblich durch einen Initiator ausgelöst. Als Initiatoren zur Initiierung der Polymerisation können alle unter den Polymerisationsbedingungen Radikale bildende Initiatoren verwendet werden, die üblicherweise bei der Herstellung von Superabsorbern eingesetzt werden. Auch eine Initiierung der Polymerisation durch Einwirkung von Elektronenstrahlen auf die polymerisierbare, wässrige Mischung ist möglich. Die Polymerisation kann allerdings auch in Abwesenheit von Initiatoren der obengenannten Art durch Einwirkung energiereicher Strahlung in Gegenwart von Photoinitiatoren ausgelöst werden. Polymerisationsinitiatoren können in einer Lösung erfindungsgemäßer Monomere gelöst oder dispergiert enthalten sein. Als Initiatoren kommen sämtliche dem Fachmann bekannte, in Radikale zerfallende Verbindungen in Betracht. Besonders bevorzugte Initiatoren sowie bevorzugte einzusetzende Initiatormengen sind diejenigen Initiatoren bzw. Mengen, die in der DE 102 23 060 A1 als bevorzugte Initiatoren bzw. Mengen genannt werden.

Bevorzugt wird erfindungsgemäß ein Redoxsystem bestehend aus Wassersoffperoxid, Natriumperoxodisulfat und Ascorbinsäure eingesetzt. Allgemein sind erfindungsgemäß Azoverbindungen als Initiatoren bevorzugt, wobei Azo-bisamidinopropan-dihydrochlorid besonders bevorzugt ist. In der Regel wird die Polymerisation mit den Initiatoren in einem Temperaturbereich von 0 bis 90°C initiiert.

Als wasserlösliche Polymere (α4) können in den absorbierenden Polymeren wasserlösliche Polymerisate, wie teil- oder vollverseifter Polyvinylalkohol, Polyvinylpyrrolidon, Stärke oder Stärkederivate, Polyglykole oder Polyacrylsäure enthalten, vorzugsweise einpolymerisiert sein. Das Molekulargewicht dieser Polymere ist unkritisch, solange sie wasserlöslich sind. Bevorzugte wasserlösliche Polymere sind Stärke oder Stärkederivate oder Polyvinylalkohol. Die wasserlöslichen Polymere, vorzugsweise synthetische wie Polyvinylalkohol, können auch als Pfropfgrundlage für die zu polymerisierenden Monomeren dienen.

Als Hilfsstoffe (α5) können in den absorbierenden Polymeren vorzugsweise Stellmittel, Geruchsbinder, oberflächenaktive Mittel oder Antioxidatien enthalten sein. Diese Hilfsstoffe (α5) werden vorzugsweise vor der Polymerisation der Monomerenlösung zugesetzt, oder aber nach Herstellung der Polymere mit diesen vermischt, wobei für das Vermischen die dem Fachmann bekannten Mischaggregate verwendet werden können, z. B. der Patterson-Kelley-Mischer, DRAIS-Turbulenzmischer, Lödigemischer, Ruberg-Mischer, Schneckenmischer, Tellermischer und Wirbelschichtmischer sowie kontinuierlich arbeitende, senkrechte Mischer, in denen die Polymere und die Hilfsstoffe (α5) mittels rotierender Messer in schneller Frequenz gemischt wird (Schugi-Mischer).

Vorteilhafter Weise weist das als ein Polymerkuchen im Verfahrensschritt iii) getrocknete Gelgranulat mindestens eine der folgenden Eigenschaften auf:
(ϕ1) die maximale Aufnahme von 0.9 Gew.-% wässriger NaCl-Lösung gemäß ERT 440.1-99 liegt in einem Bereich von 10 bis 1000 g/g SAP Granulat,
(ϕ2) der mit 0.9 Gew.-%er wässriger NaCl-Lösung extrahierbare Anteil beträgt gemäß ERT 470.1-99 weniger als 30, bezogen auf das SAP Granulat,
(ϕ3) die Schüttdichte gemäß ERT 460.1-99 liegt im Bereich von 300 bis 1000 g/l,
(ϕ4) der pH-Wert von 1g des SAP Granulats in 11 Wasser gemäss ERT 400.1-99 liegt im Bereich von 4 bis 10,
(ϕ5) der CRC-Wert gemäß ERT 441.1-99 liegt im Bereich von 10 bis 100 g/g,
(ϕ6) der AAP-Wert bei einem Druck von 2069 Pa (0,3 psi) gemäß ERT 442.1-99 liegt im Bereich von 10 bis 60 g/g.

Es ist weiterhin bevorzugt, dass mindestens 30, bevorzugt mindestens 60 und besonders bevorzugt mindestens 80 Gew.-% der absorbierenden Polymerteilchen eine Teilchengröße im Bereich von 150 bis 850 µm aufweisen. Weiterhin ist es erfindungsgemäß bevorzugt, dass das Gelgranulat zu mindestens 50 Gew.-%, vorzugsweise zu mindestens 75 Gew.-% auf Partikeln mit einer Teilchengröße in einem Bereich von 300 bis 600 µm basiert.

Es ist weiterhin bevorzugt, dass im Zusammenhang mit dem erfindungsgemäßen Verfahren sowie im Zusammenhang mit den durch das erfindungsgemäße Verfahren erhältlichen absorbierenden Polymeren die nur mit einer Untergrenze angegebenen Werte von erfindungsgemäßen Merkmalen eine Obergrenze besitzen, die das 20-fache, vorzugsweise das 10-fache und besonders bevorzugt das 5-fache des am meisten bevorzugten Wertes der Untergrenze besitzen.

Es ist weiterhin bevorzugt, dass die durch das erfindungsgemäßen Verfahren erhältlichen absorbierenden Polymere, vorzugsweise Polymerteilchen, mindestens eine der folgenden Eigenschaften aufweisen:
(A) maximale Aufnahme von 0,9 Gew.-%er NaCl-Lösung gemäß ERT 440.1-99 in einem Bereich von mindestens 10 bis 1000, bevorzugt von 15 bis 500 und besonders bevorzugt von 20 bis 300 g/g,
(B) der mit 0,9 Gew.-%er wässriger NaCl-Lösung extrahierbare Anteil gemäß ERT 470.1-99 beträgt weniger als 30, bevorzugt weniger als 20 und besonders bevorzugt weniger als 10 Gew.-%, bezogen auf das absorbierende Polymer,
(C) die Schüttdichte gemäß ERT 460.1-99 liegt im Bereich von 300 bis 1000, bevorzugt 310 bis 800 und besonders bevorzugt 320 bis 700 g/l,
(D) der pH-Wert gemäß ERT 400.1-99 von 1 g des absorbierenden Polymers in 11 Wasser liegt im Bereich von 4 bis 10, bevorzugt von 5 bis 9 und besonders bevorzugt von 5,5 bis 7,5,
(E) der CRC-Wert nach ERT 441.1-99 liegt im Bereich von 10 bis 100, bevorzugt 15 bis 80 und besonders bevorzugt 20 bis 60 g/g,
(F) der AAP-Wert gemäß ERT 442.1-99 bei einem Druck von 2069 Pa (0,3 psi) liegt im Bereich von 10 bis 60, bevorzugt 15 bis 50 und besonders bevorzugt 20 bis 40 g/g.

Die sich aus den vorstehenden Eigenschaften ergebenden Eigenschaftskombinationen von zwei oder mehr dieser Eigenschaften stellen jeweils bevorzugte Ausführungsformen des durch das erfindungsgemäßen Verfahren erhältlichen Polymers dar. Weiterhin als erfindungsgemässe Ausführungsformen besonders bevorzugt sind Verfahren, in denen das erhaltene, absorbierende Polymer die nachfolgend als Buchstaben oder Buchstabenkombinationen dargestellten Eigenschaften oder Eigenschaftskombinationen zeigt: A, B, C, D, E, F, AB, AC, AD, AE, AF, EF, ABC, ABD, ABE, ABF, ACD, ACE, ACF, ADE, ADF, AEF, CEF, ABCD, ABCE, ABCF, ABDE, ABDF,ACDE, ACDF, ACEF, ADEF, ACDEF, ABDEF, ABCEF, ACBDF, ABCDE, ABCDEF, wobei die Kombinationen CEF besonders bevorzugt ist und die Kombination EF darüber hinaus bevorzugt ist.

In einer anderen Ausführungsformen des erfindungsgemäßen Verfahrens wird der Außenbereich der durch das erfindungsgemäße Verfahren erhältlichen absorbierenden Polymere, vorzugsweise Polymerteilchen, mit einer Verbindung enthalten ein Al³⁺-Ion in Kontakt gebracht. Dabei ist es bevorzugt, dass die Verbindung enthaltend Al³⁺-Ionen in einer Menge in einem Bereich von 0,01 bis 30 Gew.-%, besonders bevorzugt in einer Menge in einem Bereich von 0,1 bis 20 Gew.-% und darüber hinaus bevorzugt in einer Menge in einem Bereich von 0,3 bis 5 Gew.-%, jeweils bezogen auf das Gewicht der absorbierenden Polymere, mit den Polymeren in Kontakt gebracht wird.

Es ist in diesem Zusammenhang weiterhin bevorzugt, dass die Al³⁺-Ionen enthaltende Verbindung in Form eines Fluids umfassend ein Lösemittel, bei dem es sich vorzugsweise um Wasser, mit Wasser mischbare organische Lösemittel wie Methanol oder Ethanol oder eine Mischung aus mindestens zwei dieser Lösemittel handelt, und die Al³⁺-Ionen enthaltende Verbindung mit dem Polymer in Kontakt gebracht wird. Vorzugsweise ist dabei die Al³⁺-Ionen enthaltende Verbindung ohne Berücksichtigung von Kristallwasser in einer Menge in einem Bereich von 0,1 bis 50 Gew.-%, bevorzugt in einer Menge im Bereich von 1 bis 30 Gew.-%, jeweils bezogen auf das Gesamtgewicht des Fluids, in dem Fluid enthalten. Weiterhin bevorzugt ist, dass das Fluid in einer Menge in einem Bereich von 0,01 bis 15 Gew.-%, bevorzugt in einer Menge in einem Bereich von 0,05 bis 6 Gew.-%, jeweils bezogen auf das Gewicht des absorbierenden Polymers mit den absorbierenden Polymer in Kontakt gebracht wird.

Bevorzugte Al³⁺-Ionen enthaltende Verbindungen sind AlCl₃ x 6 H₂O, NaAl(SO₄)₂ x 12 H₂O, KAl(SO₄)₂ mal x 12H₂O oder Al₂(SO₄)₃ X 14-18H₂O.

Es ist erfindungsgemäß weiterhin bevorzugt, dass die durch das erfindungsgemäße Verfahren erhältlichen Polymere, vorzugsweise Polymerteilchen, einen Innenbereich, einen den Innenbereich umgebenden Außenbereich sowie einen den Außenbereich umgebenden Oberflächenbereich aufweisen, wobei der Außenbereich einen höheren Vernetzungsgrad als der Innenbereich aufweist, so dass sich vorzugsweise eine Kern-Schale-Struktur ausbildet. Es ist in diesem Zusammenhang weiterhin bevorzugt, dass der Radius des Außenbereiches mindestens doppelt so groß ist wie der Radius des Innenbereiches. Die erhöhte Vernetzung im Oberflächenbereich der Polymere, vorzugsweise der Polymerteilchen, wird dabei vorzugsweise durch Nachvernetzung oberflächennaher, reaktiver Gruppen erreicht. Diese Nachvernetzung kann thermisch, photochemisch oder chemisch erfolgen.

Als Nachvernetzer für die chemische Nachvernetzung sind dabei die Verbindungen bevorzugt, die als Vernetzer (α3) der Vernetzerklassen II und IV genannt wurden. Besonders bevorzugt als Nachvernetzer ist Ethylencarbonat.

Vorzugsweise wird der Nachvernetzer in einer Menge in einem Bereich von 0,01 bis 30 Gew.-%, besonders bevorzugt in einer Menge in einem Bereich von 0,1 bis 20 Gew.-% und darüber hinaus bevorzugt in einer Menge in einem Bereich von 0,3 bis 5 Gew.-%, jeweils bezogen auf das Gewicht der in dem erfindungsgemäßen Verfahren eingesetzten absorbierenden Polymere, zur Nachvernetzung eingesetzt.

Vorzugsweise erfolgt die Nachvernetzung dadurch, dass ein Nachvemetzungsfluid umfassend ein Lösemittel, vorzugsweise Wasser, mit Wasser mischbare organische Lösemittel wie etwa Methanol oder Ethanol oder Mischungen aus mindestens zwei davon, sowie den Nachvernetzer mit dem Außenbereich der Polymere, vorzugsweise der Polymerteilchen, bei einer Temperatur in einem Bereich von 30 bis 300°C, besonders bevorzugt in einem Bereich von 100 bis 200°C in Kontakt gebracht werden. Das in Kontakt bringen erfolgt dabei vorzugsweise durch Aufsprühen des Nachvernetzungsfluids auf die Polymere und anschließendes Mischen der mit dem Nachvernetzungsfluid in Kontakt gebrachten Polymere. Dabei ist der Nachvernetzer in dem Nachvernetzungsfluid vorzugsweise in einer Menge in einem Bereich von 0,01 bis 20 Gew.-%, besonders bevorzugt in einer Menge in einem Bereich von 0,1 bis 10 Gew.-%, bezogen auf das Gesamtgewicht des Nachvernetzungsfluids, enthalten. Es ist weiterhin bevorzugt, dass das Nachvernetzungsfluid in einer Menge in einem Bereich von 0,01 bis 50 Gew.-%, besonders bevorzugt in einer Menge in einem Bereich von 0,1 bis 30 Gew.-%, jeweils bezogen auf das Gewicht der Polymere, mit den Polymeren in Kontakt gebracht wird.

Die wie vorstehend beschrieben nachvernetzten absorbierenden Polymere, vorzugsweise Polymerteilchen, werden als "nachvernetzte Polymere" bzw. "nachvernetzte Polymerteilchen" bezeichnet. In einer anderen Ausführungsformen des erfindungsgemäßen Verfahrens wird der Außenbereich der nachvernetzten Polymere, vorzugsweise Polymerteilchen, mit einer Verbindung enthalten ein Al³⁺-Ion in Kontakt gebracht. Bezüglich der Verbindung enthalten ein Al³⁺-Ion wird auf die vorstehenden Ausführungen verwiesen. Ferner ist es bevorzugt, dass die Verbindung enthalten ein Al³⁺-Ion genauso wie die anderen vorstehend beschriebenen Nachvernetzer in einem Fluid auf das absorbierende Polymer aufgebracht und anschließend ebenso thermisch behandelt wird.

Die nachvernetzten Polymere, vorzugsweise Polymerteilchen, weisen mindestens eine, vorzugsweise jede, der nachfolgenden Eigenschaften auf:
(N1) einen gemäß ERT 441.1-99 bestimmten CRC-Wert in einem Bereich von 20 bis 40 g/g, besonders bevorzugt in einem Bereich von 25 bis 35 g/g;
(N2) einen gemäß ERT 442.1-99 bei einem Druck von 2069 Pa (0,3 psi) bestimmten AAP-Wert in einem Bereich von 20 bis 35 g/g, besonders bevorzugt in einem Bereich von 25 bis 30 g/g;
(N3) einen gemäß ERT 442.1-99 bei einem Druck von 4827 Pa (0,7 psi) bestimmten AAP-Wert in einem Bereich von 20 bis 27 g/g, besonders bevorzugt in einem Bereich von 22 bis 25 g/g.

Mit Hilfe des besonderen Trocknungsverfahrens werden absorbierende Polymere mit besonders gleichmäßigen physikalisch-chemischen Eigenschaften hergestellt. Das Trocknungsverfahren erlaubt eine effiziente Herstellung von absorbierenden Polymeren. Die nach dem erfindungsgemäßen Herstellungsverfahren erhältlichen erfindungsgemäßen absorbierenden Polymere zeichnen sich durch besonders gleichmäßige physikalisch-chemische Eigenschaften aus.

Die Vorrichtung zur Zerkleinerung und Trocknung eines Polymers nach dem erfindungsgemäßen Verfahren umfasst eine Zerkleinerungseinrichtung zur Zerkleinerung des ungetrockneten Polymers zu einem Gelgranulat, eine Auflockerungseinrichtung zur Auflockerung für das Gelgranulat und eine Trocknungseinrichtung für das Gelgranulat, wobei die Zerkleinerungseinheit, die Auflockerungseinheit und die Trocknungseinheit miteinander in kommunizierender Verbindung stehen. Mit Hilfe der Zerkleinerungseinrichtung wird das ungetrocknete polymerisierte Polymer zerkleinert. Mit der Auflockerungseinrichtung wird die Schüttdichte des zerkleinerten Polymers, insbesondere des Gelgranulates, um mindestens 1, vorzugsweise mindestens 5, noch mehr bevorzugt mindestens 10, darüber hinaus bevorzugt mindestens 20 und am meisten bevorzugt um mindestens 30 vermindert. Mit der Trocknungseinrichtung wird der Wassergehalt des ungetrockneten Gelgranulats reduziert.

Vorteilhafter Weise umfasst die Zerkleinerungseinrichtung eine Schneideinheit, eine Reißeinheit und eine Wölfeinheit. Mit Hilfe der Schneideinheit wird das absorbierende Polymer geschnitten. Mit Hilfe der Reißeinheit wird das polymerisierte Polymer zerrissen, d. h. auf Zug beansprucht. Mit Hilfe der Wölfeinheit wird das polymerisierte Polymer gequetscht. Durch Kombination dieser drei Zerkleinerungsarten wird ein besonders vorteilhaft zu trocknendes Gelgranulat erzeugt. Vorteilhafter Weise ist die Auflockerungseinheit eine rotierende Trommel, vorzugsweise ein Trommelrotationsmischer. Mit Hilfe des Trommelrotationsmischers wird die mittlere Schüttgutdichte des Gelgranulats, insbesondere des ungetrockneten Gelgranulats, reduziert. Die Auflockerung bewirkt vorteilhafter Weise ein Spreitverhalten des Gelgranulats.

Das erfindungsgemäße Verfahren zur Herstellung eines absorbierenden Polymers ist durch ein Spreitverhalten des Gelgranulats nach dem Schritt ii) gekennzeichnet. Das Herstellungsverfahren eines absorbierenden Polymers zeichnet sich durch einen besonders effizienten Trocknungsschritt iii) aus, der eine besonders schonende und gleichmäßige Trocknung des Gelgranulats ermöglicht. Die so erhaltenen absorbierenden Polymere und daraus hergestellte Produkte und Erzeugnisse weisen eine besonders gleichmäßige Produktqualität und konstante physikalisch-chemische Eigenschaften auf.

Weitere Einzelheiten und Vorteile der Erfindung werden an Hand der folgenden Zeichnung und Beispiele näher erläutert. Es zeigen schematisch:
- Fig. 1: eine schematische Darstellung einer Polymerisationsvorrichtung mit einer Vorrichtung zur Trocknung eines Polymers; und

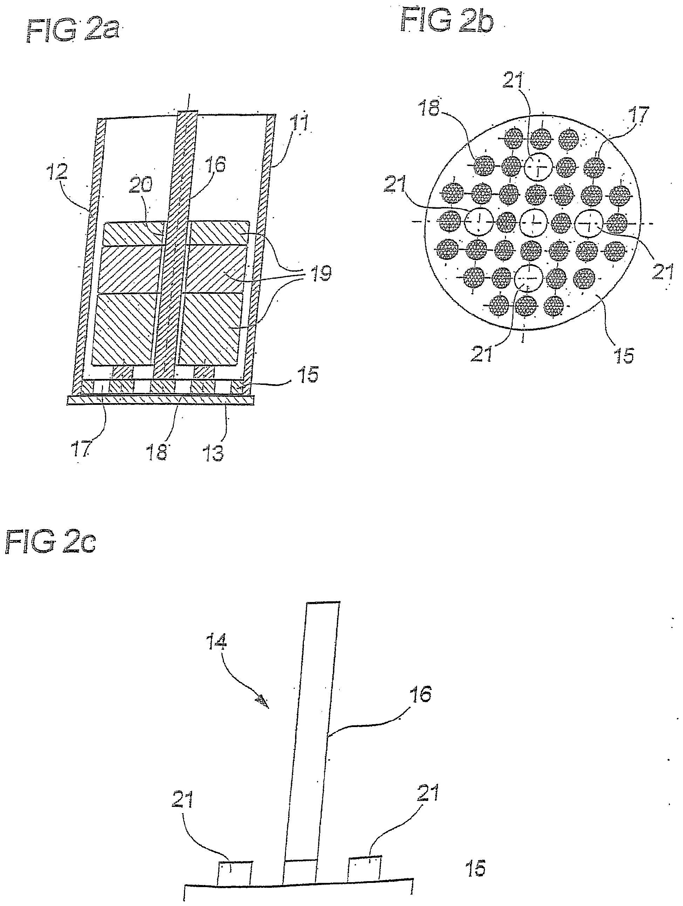

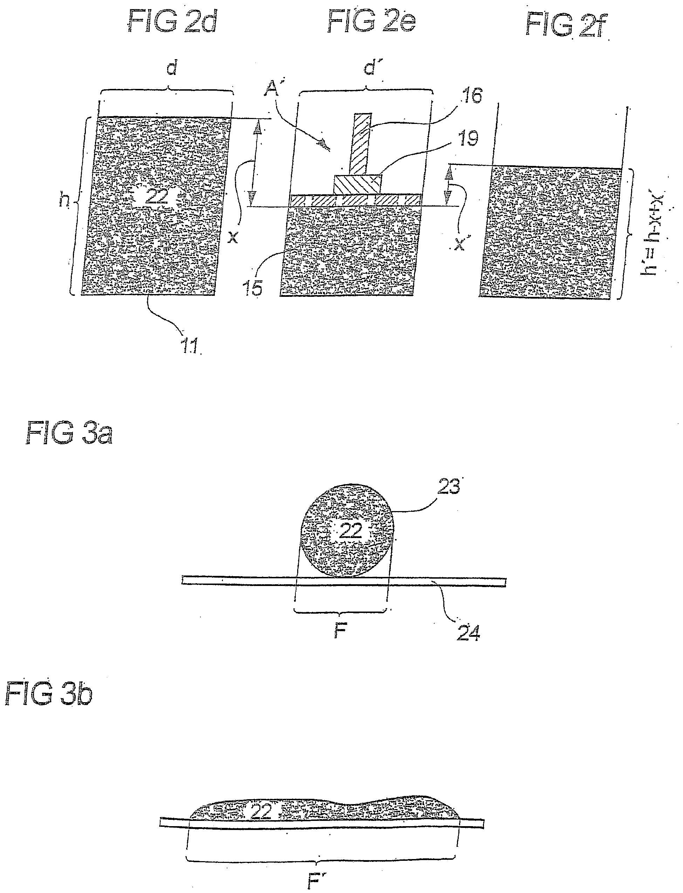

- Fig. 2a - 2f: die Vorrichtung zur Bestimmung der Kompressibilitäts- bzw. Dekompressibilitätsindices; dabei zeigt Fig. 2a das zylindrische Gefäß, in welches der Kolben (mit allen Zusatzgewichten) eingeführt wurde (ohne Gelgranulat im Gefäß) in einer Seitenansicht, Fig. 2b zeigt die Scheibe des Kolbens in einer Ansicht von oben, Fig. 2c den gesamten Kolben in einer Seitenansicht, Fig. 2d die im zylindrischen Gefäß befindlichen Gelpartikel vor dem Einführen des Kolbens, Fig. 2e die mit dem Kolben im zylindrischen Gefäß belasteten Gelpartikel, die um die Strecke x komprimiert wurden und Fig. 2f die dekomprimierten Gelpartikel im inneren des zylindrischen Gefäßes;
- Fig. 3: die Vorgehensweise zur Bestimmung der Querschnittsspreitindex Q und der Spreitzeitkonstante τ; dabei zeigt Fig. 3a den Pressling aus Gelpartikeln unmittelbar nach dem Entfernen des zylindrischen Gefäßes von oben und Fig. 3b den "zerlaufenen" Pressling im Querschnitt.
- Fig. 4: eine Auftragung eines Messergebnisses zum Kompressionsversuch;
- Fig. 5: eine Auftragung eines Messergebnisses zum Dekompressionsversuch;
- Fig. 6: eine Darstellung der Leistungsaufnahme der Scheidmühle mit und ohne Auflockerung der Gelpartikel vor dem Trocknen.

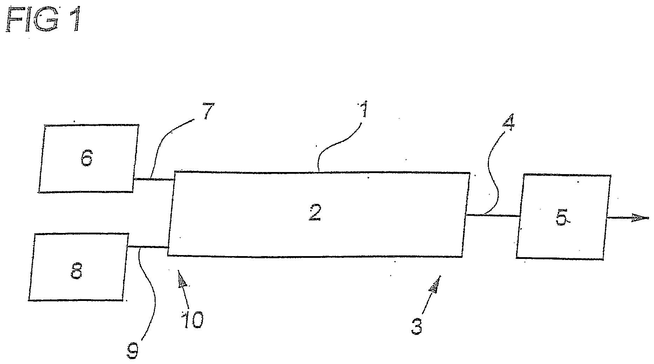

In Fig. 1 ist eine schematische Darstellung einer Polymerisationsvorrichtung 1 mit einem Polymerisationsbereich 2 angegeben, wobei der Polymerisationsbereich 2 an seinem Ausgangsbereich 3 über eine Verbindungsleitung 4 mit einer Vorrichtung 5 zur Trocknung eines Polymers verbunden ist. Ein Monomerlösungsbehälter 6 ist durch eine Monomerlösungsleitung 7 und ein Initiatorbehälter 8 ist durch eine Initiatorleitung 9 mit einem Eingangsbereich 10 des Polymerisationsbereichs 2 verbunden.

Eine genauere Beschreibung der Figuren 2 bis 6 erfolgt im Zusammenhang mit den Testmethoden und den Beispielen.

### Testmethoden

### ERT-Methode

Bei den ERT-Methoden handelt es sich um die von der EDANA (European Nonwoven and Diaper Association) entwickelten Methoden, die hier, sofern nicht anders beschrieben, angewandt werden.

Die Bestimmung des ersten und zweiten Kompressibilitätsindexes κ₁ bzw. κ₂, die Bestimmung des ersten und zweiten Dekompressibilitätsindexes κ₁' bzw. κ₂' sowie die Bestimmung des Querschnittsspreitindexes Q und der Spreitzeitkonstante τ wird bei derjenigen Temperatur durchgeführt, welche die Gelpartikel, deren Spreitverhalten bestimmt werden soll, zum Zeitpunkt der Bestimmung des Spreitverhaltens aufweisen. Gelpartikel, bei denen die vorstehend genannten Parameter nicht mittels des nachfolgend beschriebenen Messverfahrens bestimmt werden können, gelten nicht als erfindungsgemäß bevorzugte Gelpartikel.

### Erster κ₁ und zweiter κ₂ Kompressibilitätsindex

Die Bestimmung der ersten und zweiten Kompressiblitätsindexes (κ₁ bzw. κ₂) erfolgte gemäß der in den Figuren 2a-2g dargestellten Messvorrichtung.

Zur Bestimmung des ersten und zweiten Kompressiblitätsindexes wird ein nach oben offenes zylinderförmiges Gefäß 11 mit einem Volumen von 2 Litern umfassend einen zylinderförmigen Mantel 12 aus Plexiglas mit einem Außendurchmesser von 120 mm, einem Innendurchmesser von 110 mm, einer Wandstärke von 5 mm und einer inneren Querschnittsfläche von 9.503 mm² sowie einen kreisförmigen Boden 13 aus Plexiglas mit einem Durchmesser von 130 mm und einer Dicke von 6 mm (siehe Fig. 2a) verwendet. Dabei ist der zylinderförmige Mantel 12 mittig auf dem kreisförmigen Boden 13 befestigt.

In das zylinderförmigen Gefäß 11 kann ein Kolben 14 aus Polypropylen aufweisend eine Scheibe 15 mit einer Dicke von 12 mm und einen Stab 16 mit einem Durchmesser von 19,5 mm und einer Länge von 190 mm, der mittig auf der Scheibe 15 befestigt ist (siehe Fig. 2a und 2c), eingeführt werden. Der Durchmesser der Scheibe 15 wird so gewählt, dass die Scheibe 15 und somit der Kolben 14 reibungsfrei im zylinderförmigen Gefäß 11 gleiten kann. Die Masse des Kolbens m_{Kolben} beträgt 190 g. Die Scheibe 15 weist insgesamt 32 Löcher 17 mit einem Durchmesser von 9,5 mm und einer Anordnung, wie sie in Fig. 2b dargestellt ist, auf. Durch die Löcher soll beim Einführen des Kolbens 14 die Luft im zylinderförmigen Gefäß, die sich unterhalb der Scheibe 15 befindet, entweichen können. Auf der dem Stab 16 abgewandten Seite der Scheibe 15 ist ein kreisförmiges Sieb 18 aus Edelstahl mit einer Maschenweite von 50 µm und mit einem Durchmesser, der dem Durchmesser der Scheibe 15 entspricht, mittig angebracht. Das Sieb 18 bildet somit den Boden der Löcher 17 in der Scheibe 15. Das Sieb 18 soll verhindern, dass beim Komprimieren des Gelgranulates durch den Kolben 14 Gelmaterial durch die Löcher 17 gedrückt wird. Der Kolben 14 kann mit verschiedenen Zusatzmassen 19 mit der Masse mᵢ beschwert werden. Bei den Zusatzmassen 19 handelt es sich um scheibenförmige Körper aus Stahl mit einem Durchmesser von 100 mm und einer Dicke zwischen 17 und 50 mm (je nach Masse mᵢ des Zusatzgewichtes). Die Zusatzmassen weisen weiterhin mittig ein Loch 20 mit einem Durchmesser von 19,5 m auf. Durch dieses Loch 20 ist es möglich, die Zusatzmassen 19 durch Durchführen des Stabes 16 in das Loch 20 auf dem Kolben 14 zu fixieren, wie dies in Abbildung 2a gezeigt ist. Die Gesamtmasse m_{ges}=m_{Kolben}+mᵢ des Kolbens 14 mit den zusätzlichen Massen 19 soll wählbar zwischen etwa 1 und etwa 6 kg sein. Weiterhin weist die Scheibe 15 des Kolbens 14 vier kleine, zylinderförmige Erhebungen 21 mit einem Durchmesser von 15 mm und einer Höhe von 10 mm auf, deren Anordnung auf der Scheibe 15 in Fig. 2b gezeigt ist. Durch diese Erhebungen 21 wird verhindert, dass die Zusatzgewichte 19 direkt auf der Scheibe 15 zu liegen kommen (siehe Fig. 2a), da dieses zu einem Verschluss der Löcher 20 führen würde mit der Folge, dass beim Einführen des Kolbens 14 in das zylinderförmige Gefäß 11 keine Luft mehr aus dem Gefäß entweichen kann.

Nachdem das zylinderförmige Gefäß 11 sowie der Kolben 14 mitsamt dem ersten, eingesetzten Zusatzgewicht 19 auf die Temperatur der Gelpartikel, deren Spreitverhalten bestimmt werden soll, vorgewärmt wurden (beispielsweise mittels eines entsprechend temperierten Inkubators), wird das Gefäß 11 bis zu einer mittleren Füllhöhe h von h=150 mm mit dem Gelgranulat 22 eines absorbierenden Polymers, dessen Spreitverhalten bestimmt werden soll, befüllt (siehe Fig. 2d). Unmittelbar nach dem Befüllen wird der mit dem jeweiligen Zusatzgewicht 19 bestückte, vorgewärmte Kolben 14 in das Gefäß 11 eingeführt, bis er auf dem Gelgranulat 22 lastet. Es wird der Zeitpunkt notiert, an dem der Kolben 14 mit seiner Gesamtmasse (Masse des Kolbens + Masse des Zusatzgewichtes) erstmals auf den Gelpartikeln 22 ruht. 15 Sekunden nach diesem Zeitpunkt wird die Kompressionstrecke x (in mm) gemessen (siehe Fig. 2e), um die das Gelgranulat 22 unter der Last des Kolbens 14 zusammengedrückt wird.

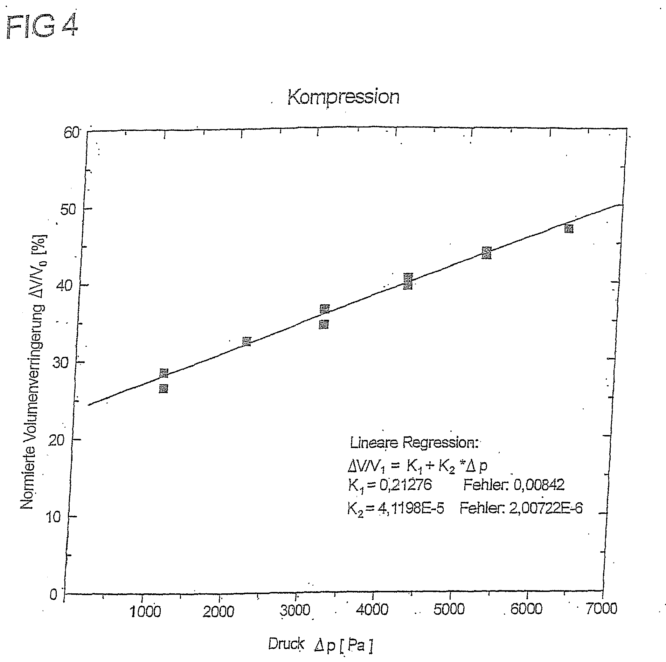

Anschließend wird der Kolben 14 und das Gelgranulat 22 aus dem zylinderförmigen Gefäß 11 genommen und das Gefäß 11 sowie der Kolben 14 wird wieder auf die Temperatur der zu untersuchenden Gelpartikel vorgewärmt. Neues Gelgranulat wird in das Gefäß 11 bis zu einer mittleren Füllhöhe h von h=150 mm gefüllt und es wird erneut der Kolben 14 mit einer zweiten (im Vergleich zur ersten Gesamtmasse z.B. schwereren) Gesamtmasse vorsichtig in das Gefäß 11 eingeführt und nach 15 Sekunden wiederum die Kompressionstrecke x (in mm) gemessen, um die das Gelgranulat unter der Last des Kolbens 14 zusammengedrückt wurde. In entsprechender Weise werden die jeweiligen Kompressionsstrecken für die restlichen Gesamtmassen bestimmt. Aus der jeweiligen Kompressionstrecke x und der Füllhöhe (150 mm) wird für jede Gesamtmasse eine jeweilige normierte Volumenverringerung in Prozent bestimmt, die durch ΔV/V₀=x/h gegeben ist. Die Normierung bezieht sich somit auf das ursprüngliche, unkomprimierte Volumen V₀. Aus den jeweiligen Gesamtmassen m_{ges} und der Innenquerschnittsfläche A' des zylinderförmigen Gefäßes 11 wird der Kompressionsdruck Δp für die jeweiligen Gesamtmassen durch Δp = m_{ges}* 9,81m/s²/A bestimmt. Die normierte Volumenverringerung ΔV/V₀ für die unterschiedlichen Gesamtmassen wird in einem Graph gegen den jeweiligen Kompressionsdruck Δp aufgetragen. Es wird eine Regressionsgrade, die mit Hilfe einer linearen Regression bestimmt wird, durch die Werte der normierten Volumenverringerung gelegt. Die lineare Regression wird für Kompressionsdrücke im Intervall zwischen 1000 Pa und 7000 Pa bestimmt. Die Steigung der Regressionsgeraden ist der zweite Kompressibilitätsindex κ₂. Der Offset der Graden ist der erste Kompressibilitätsindex κ₁ (siehe Fig. 4).

### Erster κ₁' und zweiter κ₂' Dekompressibilitätsindex

Der Dekompressionsversuch schließt sich an den Kompressionsversuch an. Es wird die gleiche Messvorrichtung wie bei der Bestimmung der Kompressionsversuche verwendet.

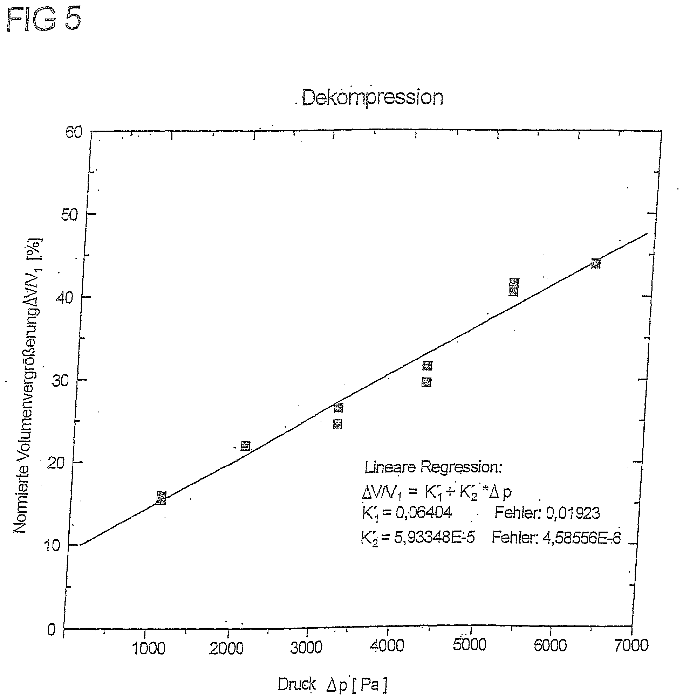

Hierbei wird das Gelgranulat 22 zunächst unter der Last eines Kolbens 14, der eine erste Gesamtmasse aufweist, wie beschrieben komprimiert und anschließend dekomprimiert d.h. entspannt. Dieses geschieht, wenn der Kolben 14 mit der Zusatzmasse mᵢ vom Gelgranulat 22 genommen wird. Durch die so bewirkte Entlastung entspannt sich das komprimierte Gelgranulat um eine Dekompressionstrecke x' (in mm) (siehe Fig. 2f). Dabei wird so vorgegangen, dass das Gelgranulat 22 in das auf die Temperatur des Gelgranulates 22 vorgewärmte Gefäß 11 bis zu einer mittleren Füllhöhe h von 150 mm eingefüllt und unmittelbar nach dem Einfüllen der ebenfalls vorgewärmte Kolben 14 mitsamt dem Zusatzgewicht 19 in das Gefäß 11 eingeführt wird. Nachdem der Kolben 14 für 15 Sekunden auf dem Gelgranulat 22 gelastet hat, wird der Kolben 14 entfernt und weitere 15 Sekunden nach dem Entfernen des Kolbens 14 wird die Dekompressionstrecke x' bestimmt (siehe Fig. 2f). Anschließend wird das Gelgranulat 22 aus dem zylinderförmigen Gefäß 11 genommen, neues Gelgranulat 22 in das erneut vorgewärmte Gefäß 11 bis zu einer mittleren Füllhöhe h von h=150 mm befüllt. Der Kolben 14 wird mit einer zweiten (im Vergleich zur ersten Gesamtmasse z.B. schwereren) Gesamtmasse vorsichtig in das Gefäß 11 eingeführt, so dass das Gelgranulat 22 komprimiert wird. Nach Wegnahme des Kolbens 14 wird das Gelgranulat 22 dekomprimiert und 30 Sekunden nach Wegnahme des Kolbens 14 die zu der zweiten Gesamtmasse korrespondierende Dekompressionstrecke x' (in mm) wird gemessen. In entsprechender Weise werden die jeweiligen Dekompressionstrecken für alle restlichen Gesamtmassen bestimmt. Aus der jeweiligen Dekompressionstrecke wird für die jeweiligen Gesamtmassen jeweils eine normierte Volumenvergrößerung ΔV'/V₁ (Einheiten: Prozent) durch ΔV'/V₁=x'/(h-x) bestimmt. Die Normalisierung bezieht sich hierbei auf das zuvor vom Kolben 14 komprimierte Volumen V₁. Die normierte Volumenvergrößerung ΔV'/V₁ wird gegenüber der Kompressionsdruckentlastung Δp' = m_{ges}*9,81m/s²/A in einem Wertebereich zwischen 1000 und 7000 Pa aufgetragen. Durch die Messpunkte wird eine Regressionsgrade gelegt, die durch lineare Regression bestimmt wird. Der zweite Dekompressibilitätsindex κ₂' ist die Steigung der Regressionsgeraden. Der erste Dekompressibilitätsindex κ₁' ist der Offset der Geraden (siehe Fig. 5).

### Querschnittsspreitindex Q und der Spreitzeitkonstante τ

Der Querschnittsspreitindex Q und die Spreitzeitkonstante τ werden durch einen sogenannten Stülpversuch bestimmt. Hierzu wird eine Vorrichtung verwendet, die der im Zusammenhang mit der Bestimmung des Kompressions- bzw. Dekompressionsindex beschriebenen Vorrichtung entspricht, mit dem Unterschied jedoch, das das zylinderförmige Gefäß 11 keinen kreisförmigen Boden 13 aufweist und somit nach unten offen ist.

Zur Bestimmung des Querschnittsspreitindex Q und der Spreitzeitkonstante τ wird das zylindrischen Gefäß 11 auf eine glatte Substratplatte 24 aus Polypropylen gestellt, so dass diese Substratplatte 24 den Boden des zylindrischen Gefäßes 11 bildet. Das zylindrische Gefäß 11 und die Substratplatte 24 wurden zuvor auf die Temperatur der Gelpartikel, deren Spreitverhalten bestimmt werden soll, vorgewärmt. Anschließend werden die Gelpartikel bis zu einer mittleren Füllhöhe von 150 mm in das zylindrische Gefäß 11 eingefüllt und unmittelbar danach wird der ebenfalls vorgewärmte Kolben 14 mitsamt einem ersten, ebenfalls vorgewärmten Zusatzgewicht 19 auf die Gelpartikel gestellt. 30 Sekunden später wird der Kolben 14 aus dem zylindrischen Gefäß 11 entfernt und das zylindrische Gefäß 11 hochgehoben, so dass auf der Substratplatte 24 ein zylinderförmiger Pressling 23 aus Gelpartikeln zurückbleibt (siehe Fig. 3a).

Bei diesem Versuch zeigt sich das Spreitverhalten darin, dass der Pressling 23, sobald das zylindrische Gefäß 11 hochgehoben wurde, nicht mehr in Form gehalten wird, sich über einen vergleichsweise großen Bereich auf der Substratplatte 24 verteilt (siehe Fig. 3b). Die Verteilung des Gelgranulats in der Ebene dauert einige Sekunden an. Das Spreitverhalten des Gelgranulats oder des aufgelockerten Gelgranulats wird durch eine Spreitzeitkonstante τ bestimmt. Die Spreitzeitkonstante τ ist durch die Zeit bestimmt, die verstreicht, bis das zu einem zylindrischen Pressling geformte Gelgranulat seine Spreitbewegung beendet, nachdem der Pressling nicht mehr in Form gehalten wird. Der Querschnittsspreitindex wird bestimmt, indem nach Beendigung der Spreitbewegung (die Spreitbewegung ist beendet, wenn an einem beliebigen Randpunkt des gespreiteten Presslings innerhalb eines Zeitintervalls von 30 Sekunden mit dem Auge kein weiteres Spreiten mehr zu erkennen ist) die Fläche bestimmt wird, die von dem Gelgranulat bedeckt wird (= F'). Dabei ist der Querschnittsspreitindex wie folgt definiert: Q = F'/F, wobei F die Querschnittsfläche des Presslings vor dem Hochheben des zylindrischen Gefäßes 1 ist (F=9.503 mm²).

### Vergleichsbeispiel

Ansatz (Angaben in Kg) für Zulauf 1:

| | |
|---|---|
| 4000,0 | Wasser |
| 2030,0 | Natronlauge 50%ig |
| 2610,0 | Acrylsäure |
| 105,0 | Methoxypolyethylenglykol(17 EO)-methacrylat |
| 15,7 | Polyethylenglykol(10 EO)-allyletheracrylat |
| 8760,7 | Monomerlösung für Zulauf 1 |

400 kg/h dieser Monomerlösung werden in einem Wärmetauscher auf 1°C abgekühlt und in einem mit 3 m³/h Stickstoff durchströmten Stripper vom gelösten Sauerstoff bis auf einen Restgehalt von 0,9 ppm befreit. Mit diesem Zulauf 1 werden vor der Aufgabe auf das Polymersationsband die folgenden Lösungsmengen vermischt:
Zulauf 2: 8,81/h Natriumperoxodisulfat-Lösung 0,75%ig
Zulauf 3: 8,8 l/h 2,2'-Azobis(2-methylpropionamidin)-dihydrochlorid
Zulauf 4: 8,81/h Wasserstoffperoxidlösung 0,5%ig
Zulauf 5: 8,81/h Ascorbinsäurelösung 0,075%ig
Zulauf 6: 10 kg/h einer Lösung von 15 kg Polyethylenglycol-400-dimethacrylat in 200 kg Wasser.

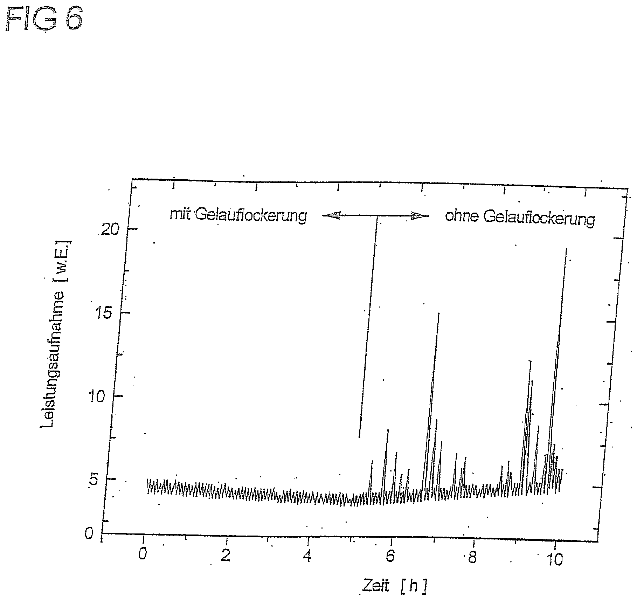

Nach einer Verweilzeit von 40 min. wird das feste, noch heiße Polymergel mit einem Fleischwolf bis zu einer Gelpartikelgröße in einem Bereich von 150-3.000 µm zerkleinert (=Vorzerkleinerung) und auf einem Bandtrockner in Zone 1 und 2 mit 160°C, Zone 3 mit 140°C und Zone 4 und 5 mit 130°C Zulufttemperatur getrocknet. Anschließend wird das getrocknete Gelgranulat auf einer dem Bandtrockner nachgeschalteten Schneidmühle gemahlen,. Die Leistungsaufnahme der Schneidmühle während des Zermahlens ist in dem in der Figur 6 abgebildeten Diagramm zu erkennen (siehe rechte Hälfte des Diagramms in der Figur 6: Leistungsaufnahme "ohne Gelauflockerung").

### Beispiel 1

Das Vergleichsbeispiel wird wiederholt. Nach der Gelzerkleinerung und vor dem Trocknen auf dem Bandtrockner werden die Gelpartikel in einer Trommel (Länge: 300 cm, Durchmesser: 80 cm), welche sich mit einer Geschwindigkeit von 7,1 Umdrehungen pro Minute um die Längsachse dreht, etwa 2 bis 3 Minuten aufgelockert. Anschließend erfolgt das Trocknen und Mahlen des Gels, wie es im Vergleichsbeispiel beschrieben wurde. Die Leistungsaufnahme der Schneidmühle während des Zermahlen ist in dem in der Figur 6 abgebildeten Diagramm zu erkennen (siehe linke Hälfte des Diagramms in der Figur 6: Leistungsaufnahme "mit Gelauflockerung").

Der Abbildung 6 ist zu entnehmen, dass das Auflockern der Gelpartikel vor dem Trocknen zu einer erkennbaren Verringerung der Leistungsaufnahme der Schneidmühle, mit der die getrockneten Gelpartikel zermahlen werden, führt.

### Beispiel 2

Bei dem im Beispiel 1 nach der Auflockerung und vor dem Trocknen erhaltenen Gelpartikeln, die eine Temperatur von 62°C aufwiesen, wurde das Spreitverhalten bestimmt.

### Kompressions- und Dekompressionsverhalten:

In dem Kompression-/Dekompressionsversuchen erkennt man, dass die Kompressionsbewegung stärker ist als die Dekompressionsbewegung, d.h. die Kompressionstrecke x vom Betrag her größer ist als die Dekompressionstrecke x'. In der nachfolgenden Tabelle 1 werden jeweils zwei experimentell erhalte Werte für eine ursprüngliche Füllhöhe h = 150 mm dargestellt:

**Tabelle 1**

| Gesamtmasse [g] | Kompressionstrecke x [mm]¹⁾ | Dekompressionstrecke x' [mm]¹⁾ |
|---|---|---|
| 1.185 | 30 | 16 |
| 2175 | 50 | 22 |
| 3.185 | 53 | 35,5 |
| 6.185 | 66 | 35 |

| | | |
|---|---|---|
| ¹⁾ Mittelwert aus 5 Messungen | | |

### Querschnittsspreitindexes Q und Spreitzeitkonstante τ

Die Ergebnisse eines Versuches zur Bestimmung des Querschnittsspreitindexes sowie zur Bestimmung der Spreitzeitkonstante τ der so aufgelockerten Gelpartikel sind in der folgenden Tabelle 2 dargestellt. Neben der Fläche F' wurde auch die mittlere Höhe h' des Presslings nach Beendigung der Spreitbewegung bestimmt. Die Bestimmung der Spreitfläche erfolgte dabei unter Verwendung von kariertem Papier, welches unter die durchsichtige Substratplatte gelegt wurde.

**Tabelle 2**

| Gesamtmasse [g] | Fläche F' [mm²]¹⁾ | Höhe h' [mm]¹⁾ |
|---|---|---|
| 1.185 | 74.375 (Q = 7,8) | 40 |
| 2175 | 71.375 (Q = 7,5) | 35 |
| 3.185 | 68.750 (Q = 7,2) | 35 |
| 6.185 | 62.500 (Q = 6,6) | 32 |

| | | |
|---|---|---|
| ¹⁾ Mittelwert aus 5 Messungen | | |

In Fig. 4 ist die normierte Volumenverringerung auf Grund der Kompression gegenüber dem Kompressionsdruck aufgetragen. Eine Regressionsgerade wurde durch die Messpunkte gelegt. Die Steigung der Geraden beträgt 4,12*10⁻⁵ Pa⁻¹. Der Offset der Geraden beträgt 21%.

In Fig. 5 ist die normierte Volumenvergrößerung gegenüber dem Dekompressionsdruck aufgetragen. Es wurde eine Regressionsgerade durch die Messwerte gelegt. Die Steigung der Geraden beträgt 5,9*10⁻⁵ Pa ⁻¹; der Offset der Geraden beträgt 6,4%. Man erkennt, dass die Dekompression, d. h. nach Entfernung des Kolbens 11 mit den Zusatzmassen 19, weniger stark ist als die Kompression. Insbesondere unterscheidet sich die Kompression von der Dekompression durch unterschiedliche Offsets, wohingegen die Steigungen der Regressionsgeraden innerhalb des Messfehlers gleich sind.

Fig. 6 zeigt die Leistungsaufnahme der Scheidmühle mit und ohne Anwendung des erfindungsgemäßen Verfahrens, also mit und ohne Auflockerung der Gelpartikel. Die Scheidmühle ist der Vorrichtung zur Trocknung 5 nachgeschaltet und dient der Zerkleinerung des getrockneten Polymers.

Die dem Bandtrockner nachgeschaltete Schneidmühle zeigt als Zeichen einer homogenen Trocknung als Folge der vor der Trocknung durchgeführten Auflockerung eine gleichmäßige Strom- bzw. Leistungsaufnahme.

### Bezugszeichenliste

- 1: Polymerisationsvorrichtung
- 2: Polymerisationsbereich
- 3: Ausgangsbereich
- 4: Verbindungsleitung
- 5: Vorrichtung zur Trocknung
- 6: Monomerlösungsleitung
- 7: Monomerlösungsbehälter
- 8: Initiatorbehälter
- 9: Initiatorleitung
- 10: Eingangsbereich
- 11: zylinderförmiges Gefäß
- 12: zylinderförmiger Mantel
- 13: kreisförmiger Boden
- 14: Kolben
- 15: Scheibe
- 16: Stab
- 17: Löcher in der Scheibe 15
- 18: Sieb mit einer Maschenweite von 50 µm
- 19: Zusatzmassen
- 20: Loch in den Zusatzmassen
- 21: Erhebungen
- 22: Gelgranulat
- 23: Pressling aus Gelgranulat

- d: Innendurchmesser des zylinderförmigen Gefäßes 11
- d': Außendurchmesser des Kolbens 14
- A': Innenquerschnittsfläche des Kolbens 14
- x: Kompressionstrecke
- x': Dekompressionstrecke
- h: Füllhöhe des Gelgranulats 22 im Gefäß 11 vor dem Kompressionsversuch
- h': Endfüllhöhe des Gelgranulats 22 im Gefäß 11 1 nach Dekompressionsversuch
- F: Querschnittsfläche des Presslings
- F': Fläche des "zerflossenen" Presslings auf der Substratplatte nach Spreiten

## Patentansprüche

1. Ein Verfahren zur Herstellung eines absorbierenden Polymers, umfassend die Verfahrensschritte
i) Polymerisation einer wässrigen Monomerlösung unter Erhalt eines Polymergels,
ii) Zerkleinern des Polymergels unter Erhalt eines Gelgranulates,
iii) Trocknen des Gelgranulates,
wobei das Gelgranulat im Schritt ii) einer mindestens dreistufigen Zerkleinerung mit einer Schneideinheit, einer Reißeinheit und einer Wolfeinheit unterworfen wird, wobei das Polymergel nach dem Zerkleinern im Schritt ii) in Form des nach dem Zerkleinern erhaltenen Gelgranulates und noch vor dem Beginn des Trocknungsschrittes iii) mechanisch aufgelockert und ein aufgelockertes Gelgranulat wird erhalten, wobei das Spreitverhalten des aufgelockerten Gelgranulats nach Schritt ii), zu einem Zeitpunkt, an dem das Gelgranulat noch einen Wassergehalt zwischen 45 und 65 % bezogen auf das Gesamtgewicht des Gelgranulats und eine Temperatur T_{GP} (GP = Gelpartikel) in einem Bereich von 40 bis 80°C aufweist, durch mindestens eines der folgenden Merkmale gekennzeichnet ist:
(δ1) ein erster Kompressibilitätsindex κ₁ des Gelgranulats liegt zwischen 15 % und 30 %;
(δ2) ein zweiter Kompressibilitätsindex κ₂ des Gelgranulats liegt zwischen 3,5*10⁻⁵Pa⁻¹ und 5*10⁻⁵ Pa⁻¹;
(δ3) ein erster Dekompressibilitätsindex κ₁' des Gelgranulats liegt zwischen 4 % und 10 %;
(δ4) ein zweiter Dekompressibilitätsindex κ₂' des Gelgranulats liegt zwischen 4*10⁻⁵ Pa⁻¹ und 8*10⁻⁵ Pa⁻¹.

2. Verfahren nach Anspruch 1, wobei das Spreitverhalten des Gelgranulats nach Schritt ii) durch mindestens eines der folgenden Merkmale gekennzeichnet ist:
(δ1) ein erster Kompressibilitätsindex κ₁ des Gelgranulats liegt zwischen 18 % und 25 %;
(δ2) ein zweiter Kompressibilitätsindex κ₂ des Gelgranulats liegt zwischen 3,9*10⁻⁵ Pa⁻¹ und 4,3*10⁻⁵ Pa⁻¹;
(δ3) ein erster Dekompressibilitätsindex κ₁' des Gelgranulats liegt zwischen 5 % und 8 %;
(δ4) ein zweiter Dekompressibilitätsindex κ₂' des Gelgranulats liegt zwischen 5*10⁻⁵ Pa⁻¹ und 6,5*10⁻⁵ Pa⁻¹.

3. Verfahren nach einem der vorhergehenden Ansprüche, wobei das Spreitverhalten des Gelgranulats oder des aufgelockerten Gelgranulats nach Schritt ii) durch einen bei einer Belastung mit einer Gesamtmasse von 1.185 g bestimmten Querschnittsspreitindex Q von mindestens 3 gekennzeichnet ist.

4. Verfahren nach einem der vorherigen Ansprüche, wobei das Spreitverhalten des Gelgranulats oder des aufgelockerten Gelgranulats nach Schritt ii) durch eine bei einer Belastung mit einer Gesamtmasse von 6.185 g bestimmte Spreitzeitkonstante τ von mindestens 2 s bestimmt wird.

5. Verfahren nach einem der vorherigen Ansprüche, wobei die Dichte des ungetrockneten Gelgranulats nach Schritt ii) kleiner als 0,7 g/cm³ beträgt.

6. Verfahren nach einem der vorhergehenden Ansprüche, wobei das Gelgranulat zu mindestens 10 Gew.-%, bezogen auf das Gelgranulat, ein absorbierendes Polymer beinhaltet, das auf
(α1) 0,1 bis 99,999 Gew.-% polymerisierten, ethylenisch ungesättigten, säuregruppenhaltigen Monomeren oder deren Salze oder polymerisierten, ethylenisch ungesättigten, einen protonierten oder quarternierten Stickstoff beinhaltenden Monomeren, oder deren Mischungen,
(α2) 0 bis 70 Gew.-% polymerisierten, ethylenisch ungesättigten, mit (α1) copolymerisierbaren Monomeren,
(α3) 0,001 bis 10 Gew.-% eines oder mehrerer Vernetzer,
(α4) 0 bis 30 Gew.-% wasserlöslichen Polymeren, sowie
(α5) 0 bis 20 Gew.-% eines oder mehrere Hilfsstoffe, jeweils bezogen auf das trockene absorbierende Polymer, basiert, wobei die Summe der Gewichtsmengen (α1) bis (α5) 100 Gew.-% beträgt.

7. Verfahren nach einem der vorherigen Ansprüche, wobei das getrocknete Gelgranulat mindestens eine der folgenden Eigenschaften aufweist:
(φ1) die maximale Aufnahme von 0.9 Gew.-%er wässriger NaCl-Lösung liegt in einem Bereich von 10 bis 1000 g/g SAP Granulat,
(φ2) der mit 0.9 Gew.-%er wässriger NaCl-Lösung extrahierbare Anteil beträgt weniger als 30, bezogen auf das SAP Granulat,
(φ3) die Schüttdichte liegt im Bereich von 300 bis 1000 g/l,
(φ4) der pH-Wert von 1 g des SAP Granulats in 1 1 Wasser liegt im Bereich von 4 bis 10,
(φ5) der CRC-Wert liegt im Bereich von 10 bis 100 g/g.
(φ6) der AAP-Wert bei einem Druck von 2069 Pa (0,3 psi) liegt im Bereich von 10 bis 60 g/g.

8. Verfahren nach Anspruch 2, wobei das Spreitverhalten des Gelgranulats nach Schritt ii) durch jedes der folgenden Merkmale gekennzeichnet ist:
(δ1) ein erster Kompressibilitätsindex κ₁ des Gelgranulats liegt zwischen 18 % und 25 %;
(δ2) ein zweiter Kompressibilitätsindex κ₂ des Gelgranulats liegt zwischen 3,9*10⁻⁵ Pa⁻¹ und 4,3*10⁻⁵ Pa⁻¹;
(δ3) ein erster Dekompressibilitätsindex κ₁' des Gelgranulats liegt zwischen 5 % und 8 %;
(δ4) ein zweiter Dekompressibilitätsindex κ₂' des Gelgranulats liegt zwischen 5*10⁻⁵ Pa⁻¹ und 6,5*10⁻⁵ Pa⁻¹.

9. Verfahren nach Anspruch 4, wobei das Spreitverhalten des Gelgranulats oder des aufgelockerten Gelgranulats nach Schritt ii) durch eine bei einer Belastung mit einer Gesamtmasse von 6.185 g bestimmte Spreitzeitkonstante τ von 6 s bestimmt wird.

10. Verfahren nach Anspruch 5, wobei die Dichte des ungetrockneten Gelgranulats nach Schritt ii) kleiner als 0.55 g/cm³ beträgt.

## Claims

1. A process for producing an absorbent polymer, comprising the process steps of
i) polymerizing an aqueous monomer solution to obtain a polymer gel,
ii) comminuting the polymer gel to obtain a pelletized gel material,
iii) drying the pelletized gel material,
wherein the pelletized gel material is subjected in step ii) to an at least three-stage comminution with a cutting unit, a tearing unit and a grinding unit, wherein the polymer gel after the comminution in step ii), in the form of the pelletized gel material obtained after the comminution and still prior to the commencement of the drying step iii), is mechanically loosened and a loosened pelletized gel material is obtained, wherein the spreading characteristics of the loosened pelletized gel material after step ii), at a time at which the pelletized gel material still has a water content between 45% and 65% based on the total weight of the pelletized gel material and a temperature T_{GP} (GP = gel particles) within a range from 40 to 80°C, is **characterized by** at least one of the following features:
(δ1) a first compressibility index κ₁ of the pelletized gel material is between 15% and 30%;
(δ2) a second compressibility index κ₂ of the pelletized gel material is between 3.5*10⁻⁵ Pa⁻¹ and 5*10⁻⁵ Pa⁻¹;
(δ3) a first decompressibility index κ₁' of the pelletized gel material is between 4% and 10%;
(δ4) a second decompressibility index κ₂' of the pelletized gel material is between 4*10⁻⁵ Pa⁻¹ and 8*10⁻⁵ Pa⁻¹.

2. Process according to Claim 1, wherein the spreading characteristics of the pelletized gel material after step ii) are **characterized by** at least one of the following features:
(δ1) a first compressibility index κ₁ of the pelletized gel material is between 18% and 25%;
(δ2) a second compressibility index κ₂ of the pelletized gel material is between 3.9*10⁻⁵ Pa⁻¹ and 4.3*10⁻⁵ Pa⁻¹;
(δ3) a first decompressibility index κ₁' of the pelletized gel material is between 5% and 8%;
(δ4) a second decompressibility index κ₂' of the pelletized gel material is between 5*10⁻⁵ Pa⁻¹ and 6.5*10⁻⁵ Pa⁻¹.

3. Process according to either of the preceding claims, wherein the spreading characteristics of the pelletized gel material or of the loosened pelletized gel material after step ii) are **characterized by** a cross-sectional spreading index Q, determined under a load with a total mass of 1.185 g, of at least 3.

4. Process according to any of the preceding claims, wherein the spreading characteristics of the pelletized gel material or of the loosened pelletized gel material after step ii) are determined by a spreading time constant τ, determined under a load with a total mass of 6.185 g, of at least 2 s.

5. Process according to any of the preceding claims, wherein the density of the undried pelletized gel material after step ii) is less than 0.7 g/cm³.

6. Process according to any of the preceding claims, wherein the pelletized gel pellet material comprises, to an extent of at least 10% by weight, based on the pelletized gel material, an absorbent polymer based on
(α1) 0.1% to 99.999% by weight of polymerized ethylenically unsaturated monomers containing acid groups or salts thereof or polymerized ethylenically unsaturated monomers including a protonated or quaternized nitrogen, or mixtures thereof,
(α2) 0% to 70% by weight of polymerized ethylenically unsaturated monomers copolymerizable with (α1),
(α3) 0.001% to 10% by weight of one or more crosslinkers,
(α4) 0% to 30% by weight of water-soluble polymers, and
(α5) 0% to 20% by weight of one or more auxiliaries, based in each case on the dry absorbent polymer, where the sum total of the amounts by weight (α1) to (α5) is 100% by weight.

7. Process according to any of the preceding claims, wherein the dried pelletized gel material has at least one of the following properties:
(ϕ1) the maximum absorption of 0.9% by weight aqueous NaCl solution is within a range from 10 to 1000 g/g of pelletized SAP material,
(ϕ2) the fraction extractable with 0.9% by weight aqueous NaCl solution is less than 30, based on the pelletized SAP material,
(ϕ3) the bulk density is in the range from 300 to 1000 g/L,
(ϕ4) the pH of 1 g of the pelletized SAP material in 1 L of water is in the range from 4 to 10, (ϕ5) the CRC value is in the range from 10 to 100 g/g,
(ϕ6) the AAP value at a pressure of 2069 Pa (0.3 psi) is in the range from 10 to 60 g/g.

8. Process according to Claim 2, wherein the spreading characteristics of the pelletized gel material after step ii) are **characterized by** each of the following features:
(δ1) a first compressibility index κ₁ of the pelletized gel material is between 18% and 25%;
(δ2) a second compressibility index κ₂ of the pelletized gel material is between 3.9*10⁻⁵ Pa⁻¹ and 4.3*10⁻⁵ Pa⁻¹;
(δ3) a first decompressibility index κ₁' of the pelletized gel material is between 5% and 8%;
(δ4) a second decompressibility index κ₂' of the pelletized gel material is between 5*10⁻⁵ Pa⁻¹ and 6.5*10⁻⁵ Pa⁻¹.

9. Process according to Claim 4, wherein the spreading characteristics of the pelletized gel material or of the loosened pelletized gel material after step ii) are determined by a spreading time constant τ, determined under a load with a total mass of 6.185 g, of 6 s.

10. Process according to Claim 5, wherein the density of the undried pelletized gel material after step ii) is less than 0.55 g/cm³.

## Revendications

1. Procédé pour la production d'un polymère absorbant, comprenant les étapes de processus
i) polymérisation d'une solution aqueuse de monomères avec obtention d'un gel de polymère,
ii) fragmentation du gel de polymère avec obtention d'un produit granulé à base de gel,
iii) séchage du produit granulé à base de gel,
dans lequel dans l'étape ii) on soumet le produit granulé à base de gel à une fragmentation au moins en trois stades avec une unité de coupe, une unité d'effilochage et une unité de hachage, dans lequel le gel de polymère après la fragmentation dans l'étape ii), sous forme du produit granulé à base de gel obtenu après la fragmentation et encore avant le début de l'étape de séchage iii) est désagrégé mécaniquement et on obtient un produit granulé à base de gel désagrégé, le comportement à l'étalement du produit granulé à base de gel désagrégé après l'étape ii) étant, à un moment où le produit granulé à base de gel présente encore une teneur en eau comprise entre 45 et 65 %, par rapport au poids total du produit granulé à base de gel, et une température T_{GP} (GP = particule de gel) dans une plage de 40 à 80 °C, **caractérisé par** au moins l'une des caractéristiques suivantes :
δ1) un premier indice de compressibilité k₁ du produit granulé à base de gel est compris entre 15 % et 30 % ;
δ2) un deuxième indice de compressibilité k₂ du produit granulé à base de gel est compris entre 3,5*10⁻⁵ Pa⁻¹ et 5*10⁻⁵ Pa⁻¹ ;
δ3) un premier indice de décompressibilité k₁' du produit granulé à base de gel est compris entre 4 % et 10 % ;
δ4) un deuxième indice de décompressibilité k₂' du produit granulé à base de gel est compris entre 4*10⁻⁵ Pa⁻¹ et 8*10⁻⁵ Pa⁻¹.

2. Procédé selon la revendication 1, dans lequel le comportement à l'étalement du produit granulé à base de gel après l'étape ii) est **caractérisé par** au moins l'une des caractéristiques suivantes :
δ1) un premier indice de compressibilité k₁ du produit granulé à base de gel est compris entre 18 % et 25 % ;
δ2) un deuxième indice de compressibilité k₂ du produit granulé à base de gel est compris entre 3,9*10⁻⁵ Pa⁻¹ et 4,3*10⁻⁵ Pa⁻¹ ;
δ3) un premier indice de décompressibilité k₁' du produit granulé à base de gel est compris entre 5 % et 8 % ;
δ4) un deuxième indice de décompressibilité k₂' du produit granulé à base de gel est compris entre 5*10⁻⁵ Pa⁻¹ et 6,5*10⁻⁵ Pa⁻¹.

3. Procédé selon l'une quelconque des revendications précédentes, dans lequel le comportement à l'étalement du produit granulé à base de gel ou du produit granulé à base de gel désagrégé après l'étape ii) est **caractérisé par** un indice d'étalement en coupe transversale Q d'au moins 3, déterminé sous une charge ayant une masse totale de 1,185 g.

4. Procédé selon l'une quelconque des revendications précédentes, dans lequel le comportement à l'étalement du produit granulé à base de gel ou du produit granulé à base de gel désagrégé après l'étape ii) est déterminé par une constante de temps d'étalement τ d'au moins 2 s, déterminée sous une charge ayant une masse totale de 6,185 g.

5. Procédé selon l'une quelconque des revendications précédentes, dans lequel la densité du produit granulé à base de gel non séché après l'étape ii) est inférieure à 0,7 g/cm³.

6. Procédé selon l'une quelconque des revendications précédentes, dans lequel le produit granulé à base de gel comporte à raison d'au moins 10 % en poids, par rapport au produit granulé à base de gel, un polymère absorbant qui est à base de
(α1) 0,1 à 99,999 % en poids de monomères à insaturation éthylénique, contenant des groupes acides, ou leurs sels, polymérisés, ou de monomères à insaturation éthylénique, comportant un atome d'azote protoné ou quaternisé, polymérisés, ou de mélanges de ceux-ci,
(α2) 0 à 70 % en poids de monomères à insaturation éthylénique, copolymérisables avec (α1), polymérisés,
(α3) 0,001 à 10 % en poids d'un ou de plusieurs agents de réticulation,
(α4) 0 à 30 % en poids de polymères hydrosolubles, ainsi que
(α5) 0 à 20 % en poids d'un ou de plusieurs adjuvants, chaque fois par rapport au polymère absorbant séché, la somme des quantités en poids (α1) à (α5) étant égale à 100 % en poids.

7. Procédé selon l'une quelconque des revendications précédentes, dans lequel le produit granulé à base de gel, séché, présente au moins l'une des propriétés suivantes :
(Φ1) l'absorption maximale d'une solution aqueuse de NaCl à 0,9 % en poids se situe dans une plage de 10 à 1 000 g/g de produit granulé à base de SAP,
(Φ2) la fraction extractible avec une solution aqueuse de NaCl à 0,9 % en poids est inférieure à 30, par rapport au produit granulé à base de SAP
(Φ3) la densité apparente se situe dans la plage de 300 à 1 000 g/l,
(Φ4) le pH de 1 g du produit granulé à base de SAP dans 1 l d'eau se situe dans l'intervalle de 4 à 10.
(Φ5) la valeur CRC se situe dans la plage de 10 à 100 g/g.
(Φ6) la valeur AAP sous une pression de 2 069 Pa (0,3 psi) se situe dans la plage de 10 à 60 g/g.

8. Procédé selon la revendication 2, dans lequel le comportement à l'étalement du produit granulé à base de gel après l'étape ii) est **caractérisé par** chacune des caractéristiques suivantes :
δ1) un premier indice de compressibilité k₁ du produit granulé à base de gel est compris entre 18 % et 25 % ;
δ2) un deuxième indice de compressibilité k₂ du produit granulé à base de gel est compris entre 3,9*10⁻⁵ Pa⁻¹ et 4,3*10⁻⁵ Pa⁻¹ ;
δ3) un premier indice de décompressibilité k₁' du produit granulé à base de gel est compris entre 5 % et 8 % ;
δ4) un deuxième indice de décompressibilité k₂' du produit granulé à base de gel est compris entre 5*10⁻⁵ Pa⁻¹ et 6,5*10⁻⁵ Pa⁻¹.

9. Procédé selon la revendication 4, dans lequel le comportement à l'étalement du produit granulé à base de gel ou du produit granulé à base de gel désagrégé après l'étape (ii) est déterminé par une constante de temps d'étalement τ de 6 s, déterminée sous une charge ayant une masse totale de 6,185 g.

10. Procédé selon la revendication 5, dans lequel la densité du produit granulé à base de gel non séché après l'étape ii) est inférieure à 0,55 g/cm³.
